Europäisches Patentamt

European Patent Office

Office européen des brevets

(19)

(11) **EP 1 419 592 B1**

(12) **EUROPÄISCHE PATENTSCHRIFT**

(45) Veröffentlichungstag und Bekanntmachung des Hinweises auf die Patenterteilung:
**29.11.2006 Patentblatt 2006/48**

(51) Int Cl.:
*H04B 7/06* (2006.01)   *H04Q 7/38* (2006.01)
*H04Q 7/36* (2006.01)   *H04Q 7/30* (2006.01)

(21) Anmeldenummer: **02754473.3**

(22) Anmeldetag: **01.08.2002**

(86) Internationale Anmeldenummer:
**PCT/DE2002/002833**

(87) Internationale Veröffentlichungsnummer:
**WO 2003/019814 (06.03.2003 Gazette 2003/10)**

(54) **VERFAHREN ZUM STEUERN DER STRAHLFORMUNG IN EINEM MOBILFUNK-KOMMUNIKATIONSSYTEM, HANDOVER-VERFAHREN UND BASISSTATION DAFÜR**

METHOD FOR CONTROLLING THE BEAM FORMATION IN A MOBILE RADIO COMMUNICATION SYSTEM, HANDOVER METHOD AND BASE STATION FOR THE SAME

PROCEDE DE REGULATION DE LA FORMATION DE FAISCEAUX DANS UNE SYSTEME DE RADIOCOMMUNICATION, PROCEDE DE TRANSFERT ET STATION DE BASE A CET EFFET

(84) Benannte Vertragsstaaten:
**DE FR GB**

(30) Priorität: **23.08.2001 DE 10141392**

(43) Veröffentlichungstag der Anmeldung:
**19.05.2004 Patentblatt 2004/21**

(73) Patentinhaber: **SIEMENS AKTIENGESELLSCHAFT**
**80333 München (DE)**

(72) Erfinder:
• WIEDMANN, Ralf
  81369 München (DE)
• SEEGER, Alexander
  85622 Feldkirchen (DE)
• RAAF, Bernhard
  81475 München (DE)
• LOBINGER, Andreas
  83714 Miesbach (DE)

(56) Entgegenhaltungen:
EP-A- 1 204 219          WO-A-01/35548
WO-A-01/39524

• HOTTINEN A ET AL: "Transmit diversity using filtered feedback weights in the FDD/WCDMA system" BROADBAND COMMUNICATIONS, 2000. PROCEEDINGS. 2000 INTERNATIONAL ZURICH SEMINAR ON ZURICH, SWITZERLAND 15-17 FEB. 2000, PISCATAWAY, NJ, USA,IEEE, US, 15. Februar 2000 (2000-02-15), Seiten 15-21, XP010376432 ISBN: 0-7803-5977-1

**EP 1 419 592 B1**

**Beschreibung**

Die vorliegende Erfindung betrifft ein Verfahren zum Steuern der Strahlformung eines Downlink-Signals, das in einem Mobilfunk-Kommunikationssystem von Basisstationen einer ersten und einer zweiten Funkzelle zu einer Teilnehmerstation ausgestrahlt wird, Handover-Verfahren für ein solches Mobilfunk-Kommunikationssystem sowie zur Durchführung des Verfahrens geeignete Basisstationen.

In Mobilfunk-Kommunikationssystemen wie z.B. dem UMTS-System werden zur Ausnutzung von räumlicher Diversität Basisstationen mit mehreren Antennen eingesetzt. Diese Antennen werden für die Datenübertragung zu einer mobilen Teilnehmerstation mit jeweils unterschiedlichen Gewichtungsfaktoren gewichtet, d.h. ein an die Teilnehmerstation zu übertragendes Downlink-Signal wird jeweils multipliziert mit dem der jeweiligen Antenne zugeordneten Gewichtungsfaktor auf diese gegeben. Die Gewichtungsfaktoren sind im allgemeinen komplexe Zahlen, bestehend aus einer Betrags- und einer Phasenkomponente. Dadurch wird an der Basisstation für jede Teilnehmerstation in einer Zelle eine Abstrahlungskeule in Richtung des Aufenthaltsortes der jeweiligen Teilnehmerstation erzeugt (Strahlformung, Beamforming). Die Gewichtungsfaktoren der einzelnen Antennen werden in einem Gewichtungsvektor zusammengefasst.

Aus EP 1 204 219 A2 ist eine Vorrichtung und ein Verfahren zum Steuern eines Sende-Antennen-Arrays bekannt, bei dem, im Falle, dass eine Mobilstation in eine Softhandover-Region eintritt, die Mobilstation dann Gewichtungsinformation für den DPCH und den PDSCH in Abhängigkeit von DPCH-Signalen und PDSCH-Signalen, welche sie von Basisstationen empfangen hat, ermittelt und diese zu Basisstationen sendet.

In sogenannten "Closed-Loop Transmit Diversity"-Verfahren wird der erforderliche Gewichtungsvektor an der Teilnehmer station geschätzt, quantisiert und über den Uplink Dedicated Physical Control Channel zur Basisstation übertragen und dort zur Strahlformung verwendet. Die Gesamtheit der für Zwecke der Strahlformung von der Teilnehmerstation an die Basisstation übertragenen Information wird im folgenden auch als "Rückkopplungsinformation" bezeichnet.

Es sind auch "Open-Loop Transmit Diversity"-Verfahren bekannt, bei denen die Basisstation einen Gewichtungsvektor anhand von indirekt erhaltenen Information über den Aufenthaltsort der Teilnehmerstation festlegt. Diese Information kann von der Basisstation z.B. durch Erfassen der Phasendifferenzen, mit denen ein Uplink-Signal von der Teilnehmerstation an den mehreren Antennen der Basisstation ankommt, gewonnen werden.

Bewegt sich die Teilnehmerstation von einer ersten Funkzelle des Mobilfunk-Kommunikationssystems in eine zweite, so muss eine von ihr unterhaltene Kommunikationsverbindung von der Basisstation der ersten Funkzelle auf die der zweiten umgeschaltet werden. Dieser Vorgang wird als Handover bezeichnet.

Im Falle des sogenannten Soft Handover gibt es einen Übergangszustand, in dem gleiche Nutzdaten an die Teilnehmerstation im Downlink von den Basisstationen von zwei oder mehr Funkzellen gesendet werden. In der Literatur wird zwischen einem Soft Handover im engeren Sinne, bei dem die Funkzellen jeweils unterschiedlichen Basisstationen entsprechen, und einem Softer Handover unterschieden, bei dem die Funkzellen unterschiedlichen Sektoren einer Basisstation entsprechen. Wenn im folgenden von Soft Handover gesprochen wird, so sind stets beide Alternativen gemeint.

Herkömmlicherweise wird bei einem Soft Handover einer Teilnehmerstation zwischen zwei Basisstationen, die räumliche Diversität einsetzen, ein gemeinsamer Gewichtungsvektor für beide Basisstationen ausgewählt. Dieser gemeinsame Gewichtungsvektor wird derart bestimmt, dass er die an der Teilnehmerstation ankommende Leistung aller am Soft Handover beteiligten Funkzellen maximiert. D.h. es wird ein Gewichtungsvektor W gesucht, für den der Ausdruck

$$P = W^H (H_1^{\ H} H_1 + H_2^{\ H} H_2 + ...)W$$

maximal wird, wobei $H_i{}^H H_i$ die Kovarianzmatrix des Übertragungskanals der i-ten am Handover beteiligten Basisstation zur Teilnehmerstation ist. $H_i{}^H$ bedeutet, dass die Matrix $H_i$ transponiert und ihre Elemente komplex konjugiert wurden, was in der Literatur auch oft mit dem Symbol "*" gekennzeichnet wird. Daraus folgt, dass alle am Handover beteiligten Basisstationen den gleichen Gewichtungsvektor verwenden, d.h. die gleiche räumliche Abstrahlungscharakteristik haben.

Dieses Verfahren hat mehrere Nachteile. Zum einen setzt es einen hohen Grad von Kompatibilität der Basisstationen des Mobilfunk-Kommunikationssystems voraus, denn die Teilnehmerstation kann die Rückkopplungsinformation nur einheitlich für alle an einem Handover beteiligten Basisstationen erzeugen, d.h. letztere müssen eine gemeinsame "Sprache" verstehen; ein anderes Problem ist, daß diese einheitliche Rückkopplungsinformation es nicht erlaubt, die von einzelnen an einem Handover beteiligten Basisstationen verwendeten Gewichtungsvektoren unabhängig voneinander zu wählen. Die Teilnehmerstation hat nämlich keine Möglichkeit, eine Basisstation gezielt zu "adressieren", um dieser und dieser allein eine Auswahl eines von ihr zu verwendenden Gewichtungsvektors mitzuteilen.

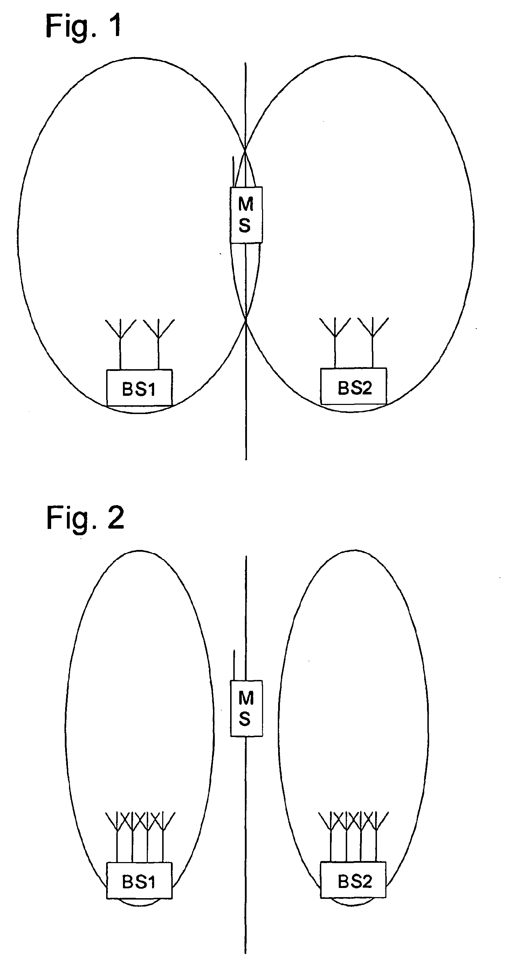

Beim herkömmlichen UMTS-System, bei dem die Basisstationen nur zwei Antennen aufweisen und daher nur einen geringen Grad von Gerichtetheit erreichen, wird dieser Nachteil in Kauf genommen. Es ergibt sich dabei die Situation, die in Figur 1 am Beispiel der Abstrahlungskeulen zweier Basisstationen BS1, BS2 und einer Teilnehmerstation MS veranschaulicht ist, die sich in einem Grenzbereich zwischen den Funkzellen der zwei Basisstationen BS1, BS2 befindet. Da beide Basisstationen BS1, BS2 den gleichen Gewichtungsvektor anwenden, sind ihre Abstrahlungskeulen gleich orientiert, und die Teilnehmerstation MS befindet sich jeweils in einem Randbereich von beiden Keulen und hat daher von beiden Basisstationen keinen optimalen Empfang.

Um die Zahl von Teilnehmerstationen, die in einer Funkzelle gleichzeitig versorgt werden können, zu erhöhen, und gleichzeitig Störungen in Nachbarzellen gering zu halten, ist es an sich wünschenswert, die Zahl der Antennen an den Basisstationen zu erhöhen, um so stärker gerichtete Abstrahlungskeulen erzeugen zu können. Wie Figur 2 zeigt, bringt dies die Gefahr mit sich, daß ein herkömmlicher Soft Handover nicht mehr durchführbar ist, da die Abstrahlungskeulen beider Antennen im Grenzgebiet der Zellen nicht mehr überlappen. Wenn mehr als zwei Basisstationen an einem Handover beteiligt sind und gleichzeitig das Downlink-Signal an die Teilnehmerstation MS ausstrahlen, ist es so gut wie ausgeschlossen, daß die Keulen aller dieser Basisstationen die Teilnehmerstation erreichen. Die Teilnehmerstation MS empfängt somit keines der Downlink-Signale der Basisstationen mit ausreichender Qualität.

Eine Aufgabe der Erfindung ist es, ein Verfahren zum Steuern der Strahlformung eines Downlink-Signals anzugeben, das geringere Anforderungen an den Grad der Kompatibilität der in einem Mobilfunk-Kommunikationssystem zusammenarbeitenden Basisstationen stellt. Die Aufgabe wird gelöst durch ein Verfahren gemäß Anspruch 1. Vorteilhafte Ausgestaltungen sind in den abhängigen Ansprüchen beschrieben.

Das Verfahren geht aus von einem Mobilfunk-Kommunikationssystem, dessen Basisstationen mehrere Antennen aufweisen und eingerichtet sind, anhand von von der Teilnehmerstation gesendeter erster Rückkopplungsinformation einen Gewichtungsvektor auszuwählen und ein Downlink-Signal an die Teilnehmerstation mit dem ausgewählten Gewichtungsvektor gewichtet auszustrahlen. Derartige Basisstationen werden z.B. im UMTS-System verwendet, wo die Basisstationen jeweils zwei Antennen aufweisen und die zwei Komponenten des Gewichtungsvektors je nach Betriebsart des UMTS-Systems verschiedene vorgegebene diskrete Werte der relativen Phasenlage oder der relativen Phasenlage und Amplitude aufweisen können. Bei fortentwickelten Basisstationen ist es hingegen beabsichtigt, anstelle fest vorgegebener Gewichtungsvektoren Gewichtungsvektoren zu verwenden, deren Koeffizienten durch von den einzelnen Teilnehmerstationen gelieferte Rückkopplungsinformation festgelegt werden. Ein Verfahren zum Bestimmen dieser Rückkopplungsinformation und ein Mobilfunk-Kommunikationssystem, in dem es angewendet wird, ist z.B. in der am 04. Juli 2000 eingereichten Patentanmeldung der Anmelderin mit dem amtlichen Aktenzeichen 100 32 426.6 beschreiben.

Eine Teilnehmerstation kann in einem Mobilfunk-Kommunikationssystem, das sowohl einfache als auch fortentwickelte Basisstationen umfaßt, ein Downlink-Signal von Basisstationen beider Typen gleichzeitig empfangen. In einer solchen Situation ist erfindungsgemäß vorgesehen, daß die Teilnehmerstation erste Rückkopplungsinformation und zweite Rückkopplungsinformation festlegt und sendet, wobei sie zur Festlegung der zweiten Rückkopplungsinformation nur ein von der fortentwickelten Basisstation empfangenes Downlink-Signal berücksichtigt. Eine einfache Basisstation, die Rückkopplungsinformation empfängt, sendet ihr Downlink-Signal geformt mit dem in der ersten Rückkopplungsinformation spezifizierten Gewichtungsvektor; eine fortentwickelte Basisstation sendet ein Downlink-Signal geformt mit einem anhand der zweiten Rückkopplungsinformation aktualisierten Gewichtungsvektor.

Vorzugsweise ist das von der Teilnehmerstation an die Basisstationen gesendete Uplinksignal in Rahmen mit mehreren Zeitschlitzen gegliedert, und die Teilnehmerstation sendet an einer vorgegebenen Position jedes Zeitschlitzes entweder die erste oder die zweite Rückkopplungsinformation. Es obliegt dann den Basisstationen, anhand der Nummer eines Zeitschlitzes in einem Rahmen zu entscheiden, ob die übertragene Rückkopplungsinformation erste oder zweite Rückkopplungsinformation ist.

Wenn der Anteil der zweiten Rückkopplungsinformation an der gesamten Rückkopplungsinformation klein im Vergleich zur ersten ist, kann vorgesehen werden, daß die einfache Basisstation nicht zwischen erster und zweiter Rückkopplungsinformation differenziert, sondern die zweite ebenfalls als erste Rückkopplungsinformation interpretiert. Dies erlaubt es, herkömmliche Basisstationen nach UMTS-Standard völlig ohne technische Änderungen in Verbindung mit weiterentwickelten Basisstationen in einem Mobilfunk-Kommunikationssystem zu betreiben. Dies ist insbesondere denkbar bei einem auf UMTS aufbauenden System, bei dem jeder Rahmen in 15 Zeitschlitze unterteilt ist und die Teilnehmerstation in 14 dieser Zeitschlitze erste Rückkopplungsinformation und in einem Zeitschlitz zweite Rückkopplungsinformation überträgt. Pro Zeitschlitz wird ein Bit Rückkopplungsinformation übertragen. Die Wahrscheinlichkeit, daß hier das in einem Zeitschlitz übertragene Bit zweite Rückkopplungsinformation bei Interpretation als erste Rückkopplungsinformation zu einem falschen Ergebnis führt, ist 0,5, so daß im Mittel in nur einem von 30 Zeitschlitzen die Verwendung eines fehlerhaften Gewichtungsvektors resultiert.

Alternativ kann vorgesehen werden, daß die einfache Basisstation die von der Teilnehmerstation gesendete zweite Rückkopplungsinformation ignoriert. In diesem Fall kann die Teilnehmerstation in einem Zeitschlitz, wo zweite Rückkopplungsinformation übertragen wird, den im vorherigen Zeitschlitz verwendeten Gewichtungsvektor unverändert weiterverwenden.

Bei Verwendung eines UMTS-Rahmenformates ist der Zeitschlitz, in dem die zweite Rückkopplungsinformation übertragen wird, vorzugsweise der letzte Zeitschlitz. Dieser erfordert nämlich beim herkömmlichen UMTS-Standard eine andere Art der Verarbeitung als die übrigen 14 Zeitschlitze, welche ersatzlos entfallen kann, wenn dieser Zeitschlitz zweite Rückkopplungsinformation enthält und von der einfachen Basisstation ignoriert werden kann.

Zur Festlegung der ersten Rückkopplungsinformation kann die Teilnehmerstation gemäß einer ersten Ausgestaltung der Erfindung allein das Downlink-Signal heranziehen, das sie von der wenigstens einen einfachen Basisstation empfängt. In diesem Fall ist es sinnvoll, daß die fortentwickelte Basisstation die erste Rückkopplungsinformation ignoriert. Stattdessen kann die fortentwickelte Basisstation fortwährend einen einzigen anhand der zweiten Rückkopplungsinformation aktualisierten Gewichtungsvektor verwenden, oder sie kann unter mehreren auswählbaren Gewichtungsvektoren einen anhand einer in einem offenen Regelkreis gewonnenen Information über die relative Lage der Teilnehmerstation in Bezug zu der fortentwickelten Basisstation auswählen.

Eine solche Ortsinformation kann in unterschiedlicher, im folgenden noch genauer erläuterter Weise gewonnen werden.

Einer anderen Ausgestaltung zufolge kann die Teilnehmerstation zur Festlegung der ersten Rückkopplungsinformation sowohl das von der wenigstens einen einfachen Basisstation kommende Downlink-Signal als auch das von der wenigstens einen fortentwickelten Basisstation kommende heranziehen. In einem solchen Fall kann die fortentwickelte Basisstation die erste Rückkopplungsinformation bei der Auswahl eines Gewichtungsvektors berücksichtigen. Vorzugsweise legt die Teilnehmerstation die erste Rückkopplungsinformation so fest, daß die Summe der Downlink-Signalleistung von einfachen und fortentwickelten Basisstationen maximiert wird.

Dies kann z.B. geschehen, indem die Teilnehmerstation denjenigen Wert m der ersten Rückkopplungsinformation festlegt, der den Ausdruck

$$P_m = w_m^H (\sum_i H_i^H H_i) w_m + \sum_i v_{i,m}^H G_i^H G_i v_{i,m}$$

maximiert, wobei $w_m$ einen an einer einfachen Basisstation wählbaren Gewichtungsvektor, $v_m$ einen an einer fortentwickelten Basisstation wählbaren Gewichtungsvektor, $H_i$ die Impulsantwort der Antennen einer einfachen Basisstation i und $G_i$ die Impulsantwort der Antennen einer fortentwickelten Basisstation i bezeichnet.

Das oben definierte Verfahren zum Steuern der Strahlformung wird vorzugsweise bei der Durchführung eines Handovers einer Teilnehmerstation von einer abgebenden an eine übernehmende Basisstation eines Mobilfunk-Kommunikationssystems eingesetzt, bei dem in einer Übergangsphase des Handovers die Teilnehmerstation mit einer Mehrzahl von Basisstationen, darunter die abgebende und die übernehmende Basisstation, kommuniziert.

Eine weitere Lösung des Problems, im Rahmen eines Handovers zwischen Basisstationen eines Mobilfunk-Kommunikationssystems die Kompatibilität aufrecht zu erhalten, wenn sowohl einfache als auch fortentwickelte Basisstationen am Handover beteiligt sind, ist in Anspruch 14 angegeben. Bei diesem Verfahren setzt eine fortentwickelte Teilnehmerstation zu Beginn der Übergangsphase des Handovers, in der mehrere Basisstationen gleichzeitig mit der Teilnehmerstation kommunizieren, als auswählbare Gewichtungsvektoren die für die einfachen Basisstationen vorgegebenen Gewichtungsvektoren. Auf diese Weise ist sie in der Lage, in der Übergangsphase ihre Strahlformung in gleicher Weise wie eine einfache Basisstation zu steuern und auf von der Teilnehmerstation gelieferte erste Rückkopplungsinformation sinnvoll zu reagieren. Diese Teilnehmerstation braucht bei der Erzeugung der Rückkopplungsinformation nicht zu berücksichtigen, zwischen welchen Typen von Basisstation einfach oder fortentwickelt, der Handover stattfindet.

Wenn die fortentwickelte Basisstation abgebende Station ist, so ist das Setzen der vorgegebenen Gewichtungsvektoren ein Überschreiben der zuvor von ihr verwendeten, spezifisch an die Teilnehmerstation angepassten Gewichtungsvektoren. Um die Überschreibung vorzunehmen, ist lediglich erforderlich, daß die fortentwickelte Basisstation die Handover-Situation erkennt; eine Übertragung der Koeffizienten der festgelegten Gewichtungsvektoren an die fortentwickelte Basisstation in Form von zweiter Rückkopplungsinformation ist nicht vorgesehen.

Um die Steuerung der Teilnehmerstation einfach zu halten, ist vorzugsweise vorgesehen, dass diese während eines Handovers, genauso wie während der normalen Kommunikation mit einer einzigen Basisstation, in bestimmten Zeitschlitzen zweite Rückkopplungsinformation sendet.

Vorzugsweise ändert die fortentwickelte Basisstation die vorgegebenen Gewichtungsvektoren während der Dauer des Handovers dennoch nicht, so daß sie während der gesamten Übergangsphase das Verhalten einer einfachen Basisstation nachbildet. Falls die fortentwickelte Basisstation abgebende Station ist, kann sie die von der Teilnehmerstation im Laufe eines Handovers gelieferte zweite Rückkopplungsinformation einfach ignorieren, da nicht anzunehmen ist, dass sie sie noch benötigen wird.

Bevorzugt ist allerdings, daß die fortentwickelte Basisstation die Gewichtungsinformation oder von ihr abgeleitete Information wie etwa einen anhand der zweiten Rückkopplungsinformation festgelegten Gewichtungsvektor, puffert. Wenn sie übernehmende Station ist, kann sie so am Ende des Handovers die vorgegebenen Gewichtungsvektoren durch von der zweiten Rückkopplungsinformation abgeleitete Gewichtungsvektoren ersetzen. So stehen bereits kurze Zeit nach Abschluß des Handovers optimal an die Übertragungssituation zwischen der fortentwickelten Basisstation und der Teilnehmerstation angepaßte Gewichtungsvektoren zur Verfügung.

Die Antennenzahl einer fortentwickelten Basisstation kann höher sein als die einer einfachen Basisstation. Dies erfordert, daß bei normaler Kommunikation zwischen der fortentwickelten Basisstation und einer Teilnehmerstation, außerhalb eines Handovers, die fortentwickelte Basisstation orthogonale Pilot-Bit-Folgen in einer der Zahl der Antennen entsprechenden Anzahl sendet, damit die Teilnehmerstation zu jeder dieser Antennen eine Kanalschätzung durchführen und Rückkopplungsinformation liefern kann. Ein vorgegebener Gewichtungsvektor der einfachen Basisstation hat in diesem Fall - entsprechend der kleineren Antennenzahl der einfachen Basisstation - eine kleinere Zahl von Koeffizienten als ein "normaler" Gewichtungsvektor der fortentwickelten Basisstation. Das heißt, die fortentwickelte Basisstation hat Antennen, deren Amplitude und Phasenlage durch die festgelegten Gewichtungsvektoren der einfachen Basisstation nicht definiert sind und infolgedessen auch nicht durch Rückkopplungsinformation von der Teilnehmerstation gezielt gesteuert werden können. Es genügt daher, wenn während des Handovers die Teilnehmerstation nur diejenigen Pilotsignale der weiterentwickelten Basisstation bei der Kanalschätzung berücksichtigt, die durch die Rückkopplungsinformation steuerbar sind.

Dies kann dazu führen, daß in dem Fall, wo die abgebende Basisstation eine einfache und die übernehmende Basisstation eine fortentwickelte Basisstation ist, die aus einer Kanalschätzung resultierende Abschätzung der erreichbaren Übertragungsqualität wegen der Vernachlässigung der zusätzlichen Antennen niedriger ist als der tatsächlich erreichbare Wert. Dies ist jedoch nicht weiter schädlich, es führt allenfalls zu einer geringfügigen Verzögerung des Handovers.

Eine weitere Lösung des Problems, im Rahmen eines Handovers zwischen Basisstationen eines Mobilfunk-Kommunikationssystems die Kompatibilität aufrecht zu erhalten, wenn sowohl einfache als auch fortentwickelte Basisstationen am Handover beteiligt sind, ist das in Anspruch 22 definierte Verfahren. Bei diesem Verfahren ist die Strahlformung durch die einfache Basisstation völlig unabhängig von der Rückkopplungsinformation, so daß die Teilnehmerstation diese allein anhand des von der fortentwickelten Basisstation gesendeten Downlink-Signals festlegen und so für die fortentwickelte Basisstation optimierte Rückkopplungsinformation liefern kann. Solange der Handover andauert, kann die einfache Basisstation z.B. einen ungerichteten Strahl formen, einen Gewichtungsvektor, der zu Beginn des Handovers ausgewählt war, bis zum Ende des Handovers weiterverwenden, oder den Gewichtungsvektor im Laufe des Handovers anhand einer in einem offenen Regelkreis gewonnenen Information über die relative Lage der Teilnehmerstation in Bezug zu der einfachen Basisstation auswählen.

Eine weitere Lösung des Problems, daß wenn im Handover eine Teilnehmerstation mit mehreren Basisstationen gleichzeitig kommuniziert, sie die von den Basisstationen verwendeten Gewichtungsvektoren nicht einzeln festlegen kann, ist in Anspruch 27 angegeben. Indem bei diesem Verfahren eine an einem Handover beteiligte Basisstation in einer Anfangsphase des Handovers Information über die relative Lage einer Teilnehmerstation in Bezug zu dieser Basisstation in einem offenen Regelkreis gewinnt, ist die Basisstation in der Lage, von Beginn einer Übergangsphase an, in der die Teilnehmerstation mit mehreren Basisstationen gleichzeitig kommuniziert, einen an die Position der Teilnehmerstation angepaßten Gewichtungsvektor zu verwenden.

Vorzugsweise legen alle am Handover beteiligten Basisstationen mit Ausnahme der abgebenden Basisstation wenigstens einmal zu Beginn des Handovers einen Gewichtungsvektor anhand von in einem offenen Regelkreis gewonnener Information fest. Bei der abgebenden Basisstation ist dies nicht erforderlich, da diese Rückkopplungsinformation empfangen hat, die es ihr in einem geschlossenen Regelkreis ermöglicht, einen Gewichtungsvektor auszuwählen.

Wenn unter den am Handover beteiligten Stationen die übernehmende Station ausgewählt worden ist, kann vorgesehen werden, daß, so lange die Übergangsphase der gemeinsamen Kommunikation mit allen beteiligten Basisstationen andauert, der von der übernehmenden Basisstation verwendete Gewichtungsvektor anhand von von der Teilnehmerstation gesendeter Rückkopplungsinformation festgelegt wird.

Bei Basisstationen, die weder abgebende noch übernehmende Basisstation sind, ist es zweckmäßig, einen in der Anfangsphase des Handovers ausgewählten Gewichtungsvektor bis zum Ende des Handovers unverändert zu verwenden. Eine solche Basisstation ignoriert die von der Teilnehmerstation gelieferte Rückkopplungsinformation vollständig.

Als Information über die relative Lage der Teilnehmerstation kann eine Angabe über die Identität der abgebenden Basisstation genutzt werden. Eine solche Angabe kann z.B. leitungsgebunden zwischen den Basisstationen des Mobilfunk-Kommunikationssystems verbreitet werden. Eine Basisstation, die eine solche Angabe empfängt, ist in der Lage, in Kenntnis ihrer eigenen geographischen Position relativ zu der der abgebenden Basisstation einen geeigneten Gewichtungsvektor auszuwählen.

Um eine genauere Auswahl des Gewichtungsvektors zu ermöglichen, ist es sinnvoll, wenn die Information ferner Angaben über die Position der Teilnehmerstation in der Zelle der abgebenden Basisstation umfaßt.

Weitere Merkmale der Erfindung ergeben sich aus der nachfolgenden Beschreibung von Ausführungsbeispielen mit Bezug auf die beigefügten Figuren. Es zeigen:

Fig. 1, bereits behandelt, eine schematische Darstellung der Strahlformung in einem herkömmlichen Mobilfunk-Kommunikationssystem, deren Basisstationen jeweils zwei Antennen haben und ein Downlink-Signal in einen relativ breiten Raumwinkel abstrahlen;

Fig. 2, bereits behandelt, eine Darstellung analog der der Fig.1 eines Mobilfunk-Kommunikationssystems mit Basisstationen, die relativ stark gebündelte Abstrahlungscharakteristiken aufweisen;

Fig. 3 zwischen zwei Basisstationen und einer Teilnehmerstation während eines Handovers ausgetauschte Informationen und von den Stationen durchgeführte Operationen gemäß einer ersten Ausgestaltung des erfindungsgemäßen Verfahrens;

Fig. 4 die Aufteilung von erster und zweiter Rückkopplungsinformation auf die Zeitschlitze eines UMTS-Rahmens;

Fig. 5 zwischen zwei Basisstationen und einer Teilnehmerstation während eines Handovers ausgetauschte Informationen und von den Stationen durchgeführte Operationen gemäß einer zweiten Ausgestaltung des Verfahrens;

Fig. 6 ein Flußdiagramm der bei einer abgebenden Basisstation in einem Handover ablaufenden Prozesse gemäß einer dritten Ausgestaltung der Erfindung;

Fig. 7 ein Flussdiagramm der an einer übernehmenden Basisstation ablaufenden Prozesse gemäß der dritten Ausgestaltung;

Fig. 8 ein Flussdiagramm der Prozesse an einer übernehmenden Basisstation ablaufenden Prozesse gemäß einer Abwandlung von Fig. 7;

Fig. 9 ein Flußdiagramm eines Handovers von einer einfachen an eine fortentwickelte Basisstation gemäß einer vierten Ausgestaltung der Erfindung;

Fig. 10 ein Flussdiagramm der von einer Basisstation bei der Einleitung eines Handover durchgeführten Operationen gemäß einer fünften Ausgestaltung der Erfindung; und

Fig. 11 eine Abwandlung des Flussdiagramms von Figur 10.

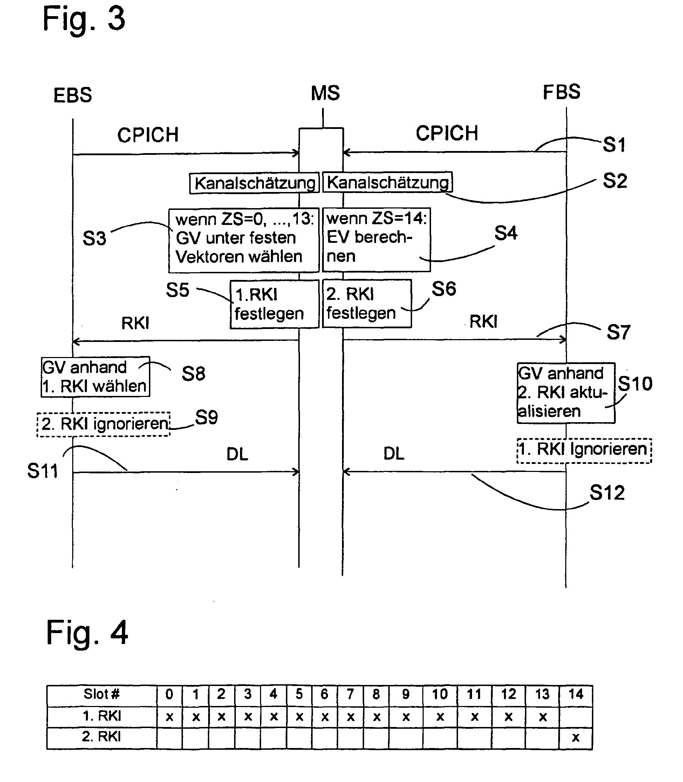

Im Laufe des Handovers einer Teilnehmerstation von einer abgebenden zu einer übernehmenden Basisstation im UMTS-System gibt es bekanntlich eine Übergangsphase, in der die Teilnehmerstation ein Downlink-Signal von abgebender und übernehmender Basisstation sowie ggf. noch von weiteren Basisstationen gleichzeitig empfängt. Figur 3 zeigt den Signalaustausch einer Teilnehmerstation MS in einer solchen Übergangsphase mit einer einfachen Basisstation EBS einerseits und einer fortentwickelten Basisstation FBS andererseits.

Die einfache Basisstation EBS besitzt zwei Antennen und ist eingerichtet, das für die Teilnehmerstation MS bestimmte Downlink-Signal gewichtet mit den Komponenten eines zweikomponentigen Gewichtungsvektors (GV) auszustrahlen. Diesen Gewichtungsvektor wählt die Basisstation EBS nach Maßgabe von von der Teilnehmerstation empfangener Rückkopplungsinformation (RKI) aus einem Satz fest vorgegebener Gewichtungsvektoren aus. Dieser Satz enthält z.B. beim Betrieb der einfachen Basisstation EBS im Closed-Loop-Mode 1 der UMTS-Norm die Vektoren

$$\frac{1}{\sqrt{2}}\,(1,1),\quad \frac{1}{\sqrt{2}}\,(1,i),\quad \frac{1}{\sqrt{2}}\,(1,-1),\quad \frac{1}{\sqrt{2}}\,(1,-i).$$

Die fortentwickelte Basisstation FBS besitzt vier Antennen und ist somit in der Lage, das für die Teilnehmerstation MS bestimmte Downlink-Signal mit einem vierkomponentigen Gewichtungsvektor gewichtet auszustrahlen. Im Normalbetrieb der fortentwickelten Basisstation FBS, wenn keine Handover-Situation vorliegt, und die Teilnehmerstation MS das Downlink-Signal nur von der fortentwickelten Basisstation FBS empfängt, führt die Teilnehmerstation MS für jede Antenne der Basisstation FBS eine Kanalschätzung durch und gewinnt daraus eine Kovarianzmatrix, wie in der oben zitierten Patentanmeldung beschrieben. Die Kovarianzmatrix dient zu zwei Zwecken. Zum einen entsprechen die Eigenvektoren einer zeitlich gemittelten Kovarianzmatrix Gewichtungsvektoren von voneinander unabhängigen Übertragungswegen, d.h. von Übertragungswegen, die nicht korrelierte Fading-Eigenschaften aufweisen und die daher vorteilhaft als Gewichtungsvektoren für die Strahlformung durch die fortentwickelte Basisstation brauchbar sind, zum anderen kann anhand der Eigenwerte dieser Eigenvektoren in einer nicht oder nur auf einem kurzen zeitlichen Maßstab gemittelten Kovarianzmatrix festgestellt werden, welcher der Eigenvektoren zeitweilig am besten zur Übertragung geeignet ist, d.h. welcher der den Eigenvektoren zugeordneten Übertragungswege momentan die geringste Dämpfung (Fading) aufweist.

Dementsprechend überträgt die Teilnehmerstation im Normalbetrieb an die fortentwickelte Basisstation Rückkopplungsinformation mit dem in Figur 4 gezeigten Format. In für die UMTS-Norm bekannter Weise ist jeder Rahmen des von der Teilnehmerstation MS an die Basisstation übertragenen Uplink-Signals in 15 Zeitschlitze unterteilt, in denen jeweils ein Bit für die Übertragung von Rückkopplungsinformation vorbehalten ist. In den Zeitschlitzen 0 bis 13 wird ein erster Typ von Rückkopplungsinformation, im folgenden auch kurz erste Rückkopplungsinformation genannt, übertragen, der der fortentwickelten Basisstation FBS angibt, welcher von verschiedenen bei ihr gespeicherten Eigenvektoren als nächstes als Gewichtungsvektor zur Strahlformung eingesetzt werden soll; im letzten Zeitschlitz jedes Rahmens wird Rückkopplungsinformation eines zweiten Typs bzw. zweite Rückkopplungsinformation übertragen, die die Zahlenwerte der Koeffizienten der einzelnen Eigenvektoren oder deren Änderungen spezifiziert, um die an der Basisstation FBS gespeicherten Eigenvektoren auf aktuellem Stand zu halten.

Die zwei Basisstationen EBS, FBS unterscheiden sich also zum einen in den Werten der auswählbaren Gewichtungsvektoren, diese sind bei der einfachen Basisstation EBS fest, während sie bei der fortentwickelten Basisstation FBS anhand der zweiten Rückkopplungsinformation variabel sind, und im Format der Rückkopplungsinformation, die sie jeweils erwarten: Rückkopplungsinformation vom zweiten Typ kann die einfache Basisstation EBS nicht verarbeiten.

Im folgenden wird mit Bezug auf Fig. 3 eine Handover-Situation betrachtet, an der eine einfache und eine fortentwickelte Basisstation EBS bzw. FBS beteiligt sind.

Wenn beide Basisstationen EBS, FBS im Laufe eines Handovers gleichzeitig ein Downlink-Signal an die Teilnehmerstation MS ausstrahlen, so erhält diese als Teil des Downlink-Signals von beiden Basisstationen jeweils ein globales Pilotsignal CPICH (Schritt S1). Eine Kanalschätzung wird für beide Pilotsignale in Schritt S2 durchgeführt. Die Zahl der abzuschätzenden Kanäle entspricht dabei jeweils der Zahl der Antennen der Basisstationen EBS bzw. FBS.

Die für die zwei Basisstationen unabhängig voneinander gewonnenen Kanalschätzungen werden in Schritt S3, S4 in an sich bekannter Weise ausgewertet; in Schritt S3 wählt die Teilnehmerstation MS unter den fest vorgegebenen Gewichtungsvektoren, die an der einfachen Basisstation EBS auswählbar sind, denjenigen aus, der anhand der gewonnenen Kanalschätzung die beste Empfangsleistung am Ort der Teilnehmerstation MS verspricht; in Schritt S4 aktualisiert die Teilnehmerstation MS die gemittelte Kovarianzmatrix anhand der neuen Kanalschätzung. Einmal pro Rahmen des Uplink-Signals werden anhand der gemittelten Kovarianzmatrix Bits zur Festlegung oder Aktualisierung der Eigenvektoren an die fortentwickelte Basisstation FBS übertragen.

Wenn der nächste zu sendende Zeitschlitz des Uplink-Signals einer der Zeitschlitze 0 bis 13 ist, so muß darin Rückkopplungsinformation vom ersten Typ gesendet werden. Diese legt die Teilnehmerstation MS in Schritt S5 anhand des in Schritt S3 gewählten Gewichtungsvektors fest. Ist der nächste Uplink-Zeitschlitz der Zeitschlitz 14, so legt die Teilnehmerstation MS in Schritt S6 Rückkopplungsinformation vom zweiten Typ fest, d.h. sie wählt den Wert der zu übertragenden Rückkopplungsinformation anhand der Eigenvektorschätzung von Schritt S4.

Die gemäß Schritt S5 oder Schritt S6 festgelegte Rückkopplungsinformation wird ausgestrahlt (S7) und von beiden Basisstationen EBS und FBS empfangen.

Wenn der Uplink-Zeitschlitz einer der Zeitschlitze 0 bis 13 ist, wählt die einfache Basisstation EBS anhand des empfangenen Rückkopplungsbits einen Gewichtungsvektor aus und verwendet diesen für die Strahlformung im nächsten Zeitschlitz des Downlink-Signals. Im Falle des Zeitschlitzes 14 kann vorgesehen werden, daß die einfache Basisstation EBS die in diesem Zeitschlitz übertragene Rückkopplungsinformation vom zweiten Typ ignoriert (Schritt S9) und statt dessen den Gewichtungsvektor erneut auswählt, der anhand der im vorhergehenden Zeitschlitz 13 übertragenen Rückkopplungsinformation ausgewählt worden ist. Eine andere Möglichkeit ist, daß die einfache Basisstation EBS anhand der im Zeitschlitz 14 übertragenen Rückkopplungsinformation genauso einen Gewichtungsvektor auswählt, wie sie dies in den anderen Zeitschlitzen tut. Dies hat den Vorteil, daß als einfache Basisstation EBS eine herkömmliche UMTS-Basisstation ohne jegliche Anpassung verwendet werden kann; da die Rückkopplungsinformation nur ein einziges Bit umfaßt, ist die Wahrscheinlichkeit, daß die einfache Basisstation EBS zufällig den richtigen Gewichtungsvektor auswählt, immer noch 0,5.

In Schritt S11 sendet die einfache Basisstation EBS das Downlink-Signal gewichtet mit dem in Schritt S8 ausgewählten Gewichtungsvektor.

Die fortentwickelte Basisstation FBS, die ebenfalls die Rückkopplungsinformation in Schritt S7 empfängt, ignoriert diese, sofern es sich um Rückkopplungsinformation vom ersten Typ handelt; die im Zeitschlitz 14 übertragene Rückkopplungsinformation vom zweiten Typ wird zur Aktualisierung eines der an der Basisstation FBS gespeicherten Eigenvektoren eingesetzt.

In Schritt S12 sendet die fortentwickelte Basisstation FBS das Downlink-Signal mit den gleichen Nutzdaten wie die einfache Basisstation EBS in Schritt 11, gewichtet mit dem aktuellen Gewichtungsvektor.

Für die Auswahl des hierfür von der fortentwickelten Basisstation FBS für die Strahlformung verwendeten Gewichtungsvektors gibt es mehrere Möglichkeiten.

Die einfachste ist natürlich, daß die Basisstation FBS während der gesamten Übergangsphase, in der die Teilnehmerstation MS im soft Handover mit den Basisstationen EBS, FBS ist, einen gleichen Gewichtungsvektor verwendet und diesen allenfalls anhand der während der Übergangsphase übertragenen Rückkopplungsinformation vom zweiten Typ aktualisiert. Diese Möglichkeit bietet sich insbesondere an, wenn die fortentwickelte Basisstation FBS die übernehmende Basisstation ist, und in der Zeit, in der die fortentwickelte Basisstation FBS mit der Teilnehmerstation MS kommuniziert, noch keine Gelegenheit bestanden hat, einen vollständigen Satz von Eigenvektoren an die fortentwickelte Basisstation FBS zu übertragen. In einem solchen Fall kann der einzige Gewichtungsvektor ein vorgegebener Standardvektor sein, der im Laufe der Zeit anhand der zweiten Rückkopplungsinformation ersetzt oder optimiert wird, oder er kann von der fortentwickelten Basisstation FBS aus einer am Uplink-Signal vorgenommenen Messung von dessen Herkunftsrichtung ermittelt werden.

Wenn mit der Rückkopplungsinformation vom zweiten Typ absolute Zahlenwerte der Elemente der Eigenvektoren übertragen werden, kann ein solcher Gewichtungsvektor an der Basisstation FBS durch einen Eigenvektor ersetzt werden, sobald die zur vollständigen Spezifizierung des Eigenvektors erforderliche Menge an zweiter Rückkopplungsinformation übertragen ist. Wenn die zweite Rückkopplungsinformation hingegen Änderungen betrifft, so ist es zweckmäßig, die Koeffizienten des durch Richtungsmessung des Uplink-Signals ermittelten Gewichtungsvektors an die Teilnehmerstation MS zu übertragen, damit diese sie bei der Festlegung der zweiten Rückkopplungsinformation berücksichtigen kann.

Wenn die fortentwickelte Basisstation FBS die abgebende Basisstation ist, so verfügt sie während der Übergangsphase über einen vollständigen Satz von Eigenvektoren. Von diesen Eigenvektoren kann sie einen auswählen und während der gesamten Dauer der Übergangsphase verwenden, oder sie kann einen Gewichtungsvektor aus Messungen des Uplink Signals bestimmen.

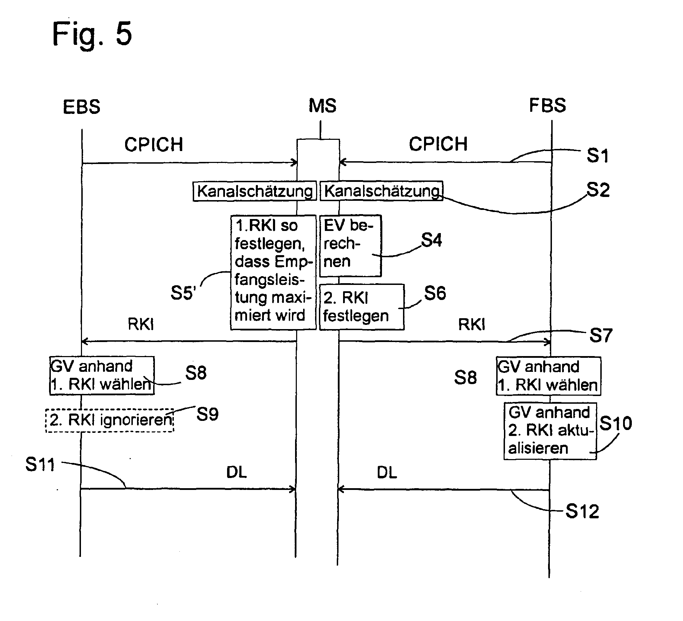

Figur 5 zeigt eine Abwandlung des in Figur 3 gezeigten Verfahrens, bei der vorausgesetzt wird, daß an der fortentwickelten Basisstation FBS mehrere Gewichtungsvektoren anhand von erster Rückkopplungsinformation auswählbar sind. Bei diesen Gewichtungsvektoren kann es sich, wenn die fortentwickelte Basisstation FBS abgebende Station ist, um Vektoren handeln, die noch vor Beginn des Handovers von der Basisstation gemessen wurden. Wenn die fortentwickelte Basisstation übernehmende Station ist, können die Gewichtungsvektoren Standardvektoren sein, die jedesmal zu Beginn eines Handovers eingestellt werden und gegebenenfalls im Laufe des Handovers durch zweite Rückkopplungsinformation optimiert werden.

Die Übertragung des globalen Pilot-Signals S1, die Kanalschätzungen S2, die Berechnung der Eigenvektoren S4 und die Festlegung der zweiten Rückkopplungsinformation S6 laufen genauso ab wie mit Bezug auf Figur 3 beschrieben. Im Gegensatz zum Verfahren von Figur 3 wird in einem abgewandelten Schritt S5' die erste Rückkopplungsinformation jedoch so festgelegt, daß die Gesamtempfangsleistung an der Teilnehmerstation MS, d.h. die Summe der Beiträge der Basisstationen EBS, FBS, maximal wird. Da die Teilnehmerstation MS die auswählbaren Gewichtungsvektoren $w_m$ an der einfachen Basisstation und $v_m$ an der fortentwickelten Basisstation kennt, kann sie für die möglichen Werte 0 oder 1 der ersten Rückkopplungsinformation m die erreichbaren Empfangsleistungen $P_m$ an der Teilnehmerstation nach folgender Formel berechnen:

$$P_m = w_m^H (H^H H) w_m + v_m^H (G^H G) v_m$$

wobei H die Kanalimpulsantwort (in Matrixform) der einfachen Basisstation, G die Kanalimpulsantwort (in Matrixform) der Antennen der fortentwickelten Basisstation bezeichnen. Wenn mehr als eine einfache und eine fortentwickelte Basisstation am Handover beteiligt sind, wird die allgemeinere Formel

$$P_m = w_m^H (\sum_i H_i^H H_i) w_m + \sum_i v_{i,m}^H G_i^H G_i v_{i,m}$$

verwendet, wobei der Summationsindex i sich jeweils über alle am Handover beteiligten einfachen bzw. fortentwickelten Basisstationen erstreckt. Die Gewichtungsvektoren $w_m$ sind für alle einfachen Basisstationen gleich; die Gewichtungsvektoren $v_{i,m}$ der fortentwickelten Basisstationen können unterschiedlich sein; alle diese Gewichtungsvektoren sind der Teilnehmerstation bekannt.

Die erste Rückkopplungsinformation wird hier von beiden Basisstationen EBS, FBS berücksichtigt; es besteht somit auch für die fortentwickelte Basisstation FBS die Möglichkeit, von einem zeitschlitz zum nächsten auf einen anderen Gewichtungsvektor umzuschalten.

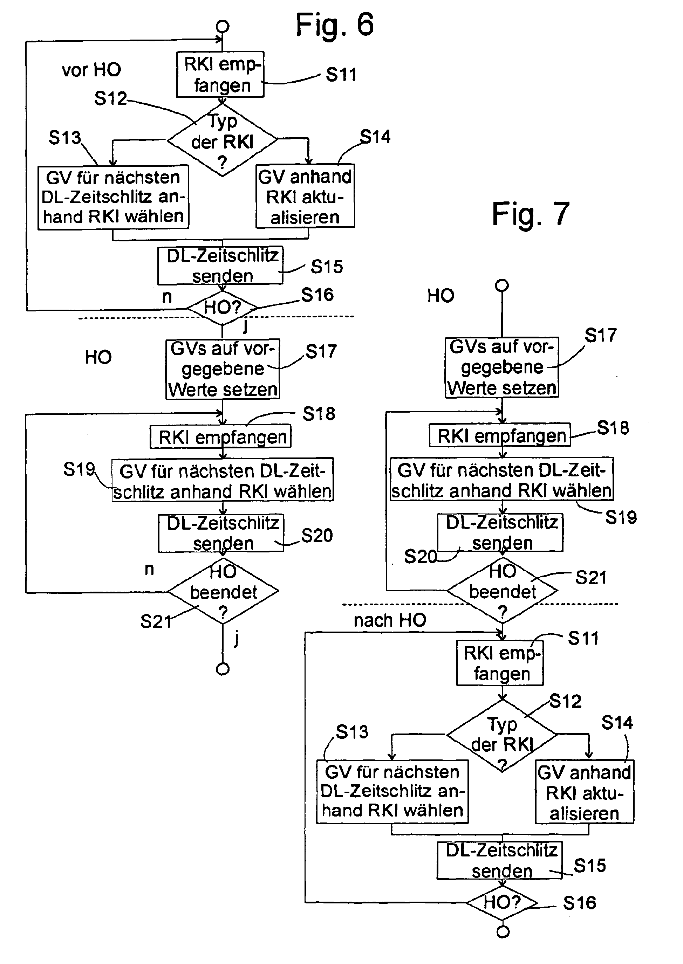

Figur 6 veranschaulicht anhand eines Flußdiagramms den Betrieb einer fortentwickelten Basisstation vor und während eines Handovers gemäß einer weiteren Ausgestaltung der Erfindung. In jedem Zeitschlitz des Uplink-Signals empfängt die fortentwickelte Basisstation FBS eine Rückkopplungsinformation (S11). Die Verteilung von erster und zweiter Rückkopplungsinformation auf die Zeitschlitze eines Rahmens kann die gleiche sein, wie in Figur 4 dargestellt. Anhand der Nummer des Zeitschlitzes entscheidet die fortentwickelte Basisstation in Schritt S12, zu welchem Typ die empfangene Rückkopplungsinformation gehören muß. Wenn es sich um erste Rückkopplungsinformation handelt, wählt sie unter den gespeicherten Eigenvektoren entsprechend dem Wert der Rückkopplungsinformation einen aus, der im nächsten Downlink-Zeitschlitz zur Strahlformung verwendet wird (S13), im Falle von Rückkopplungsinformation vom zweiten Typ verwendet sie diese in Schritt S14 zur Aktualisierung eines der gespeicherten Eigenvektoren. Dabei muß die Aktualisierung nicht in jedem Rahmen erfolgen; es ist auch möglich, daß die Basisstation mehrere Bits Rückkopplungsinformation vom zweiten Typ zunächst puffert, und eine Aktualisierung eines Gewichtungsvektors erst dann vornimmt, wenn eine bestimmte Zahl von Bits, die z.B. einen Amplituden- oder Phasenwert einer Vektorkomponente oder einen kompletten Vektor codieren, empfangen sind.

In Schritt S15 sendet die Basisstation einen Downlink-Zeitschlitz, wobei sie, wenn die empfangene Rückkopplungsinformation vom ersten Typ war, den in dieser Rückkopplungsinformation spezifizierten Gewichtungsvektor verwendet und anderenfalls den im vorherigen Zeitschlitz verwendeten Gewichtungsvektor erneut verwendet.

Diese Schritte S11 bis S15 wiederholen sich mit jedem Zeitschlitz, sofern kein Handover zu einer anderen Basisstation eingeleitet wird.

Wenn die fortentwickelte Basisstation in Schritt S16 feststellt, daß ein Handover für die Teilnehmerstation durchgeführt werden muß, überschreibt sie in Schritt S17 die gespeicherten Gewichtungsvektoren mit einem Satz von vorgegebenen Gewichtungsvektoren. Wenn die fortentwickelte Basisstation in einem Mobilfunk-Kommunikationssystem mit einfachen Basisstationen zusammenarbeitet, die lediglich zwei Antennen aufweisen und bei denen die auswählbaren Gewichtungsvektoren nicht anhand von zweiter Rückkopplungsinformation variabel sind, sondern fest vorgegeben sind, werden die Elemente der Vektoren auf zwei Antennen reduziert und mit diesen vorgegebenen Werten im Schritt S17 überschrieben. Die fortentwickelte Basisstation sendet dabei während des Handovers nur auf den beiden Antennen, für die die Gewichtungsfaktoren vorliegen. Da bei den einfachen Basisstationen lediglich zwei Elemente der Basisvektoren definiert sind, bedeutet dies, dass die fortentwickelte Basisstation während des Handovers nur auf den beiden Antennen sendet, für die diese Elemente vorliegen; die anderen Elemente werden auf Null gesetzt, d.h. diese Antennen werden während des Handovers nicht genutzt.

Wenn das Mobilfunk-Kommunikationssystem einfache und fortentwickelte Basisstationen umfasst, so kann vorgesehen werden, dass Schritt S17 bei jedem Handover durchgeführt wird, unabhängig davon, ob im Einzelfall eine einfache Basisstation am Handover beteiligt ist oder nicht. Insbesondere bei einem auf UMTS basierenden Mobilfunk-Kommunikationssystem sind aber aus dem so genannten Active Set die Identitäten der der an einem Handover beteiligten Basisstationen bekannt, so dass das System ohne zusätzlichen Signalisierungsaufwand erkennen kann, ob eine einfache Basisstation beteiligt ist und Schritt S17 nur durchführen lässt, wenn dies tatsächlich der Fall ist.

Die Teilnehmerstation MS sendet auch während des Handovers die Rückkopplungsinformation. Ist wenigstens eine einfache Basisstation am Handover beteiligt, so kann vorgesehen werden, daß die Teilnehmerstation während des Handovers ausschließlich Rückkopplungsinformation vom ersten Typ sendet; diese wird nicht nur von einfachen Basisstationen sondern auch von den fortentwickelten Basisstationen, die dabei nur zwei ihrer zur Verfügung stehenden Antennen verwenden, beim Senden des Downlink-Signals berücksichtigt.

Alternativ kann, genau wie vor dem Handover, erste und zweite Rückköpplungsinformation im Wechsel, insbesondere nach dem in Fig. 4 gezeigten Muster, übertragen werden. Falls, wie im hier betrachteten Fall, die abgebende Basisstation eine fortentwickelte Basisstation ist und die übernehmende womöglich eine einfache, hat die Übertragung von zweiter Rückkopplungsinformation während des Handovers keinen unmittelbaren Nutzen, da eine Aktualisierung der Gewichtungsvektoren an der abgebenden Basisstation nicht von Interesse ist und die einfache Basisstation nicht in der Lage ist, die zweite Rückkopplungsinformation zu nutzen. Die Übertragung von zweiter Rückkopplungsinformation während des Handovers kann allerdings dann nützlich sein, wenn die übernehmende Basisstation eine fortentwickelte Station ist, wie im folgenden noch deutlich werden wird. Der einfacheren Steuerung wegen kann es daher zweckmäßig sein, dass die Teilnehmerstation MS bei jedem Handover, unabhängig vom Entwicklungsgrad der beteiligten Basisstationen, zweite Rückkopplungsinformation überträgt.

Die abgebende fortentwickelte Basisstation empfängt die Rückkopplungsinformation in Schritt S18 und wertet diese aus, als ob sie eine einfache Basisstation wäre. In Schritt S19 wird anhand dieser Rückkopplungsinformation der Gewichtungsvektor für den nächsten Downlink-Zeitschlitz ausgewählt. Dabei wird, falls es sich um zweite Rückkopplungsinformation handelt, der im vorhergehenden Downlink-Zeitschlitz verwendete Gewichtungsvektor erneut gewählt. Eine Aktualisierung der in Schritt S17 geänderten Gewichtungsvektoren anhand der zweiten Rückkopplungsinformation findet nicht statt. Diese Gewichtungsvektoren bleiben während der gesamten Dauer des Handovers unverändert. Solange der Handover andauert, wiederholt die Basisstation die Schritte S18 bis S19 mit jedem Zeitschlitz; mit Abschluß des Handovers (S21) bricht sie die Aussendung des Downlink-Signals ab.

Das in Figur 7 gezeigte Flußdiagramm veranschaulicht die Operationen einer fortentwickelten Basisstation, die übernehmende Basisstation eines Handovers mit Beteiligung von wenigstens einer einfachen Basisstation ist. Die Operationen dieser Basisstation sind im wesentlichen die gleichen wie in Figur 6, und sind mit entsprechenden Bezugszeichen bezeichnet. Da der übernehmenden Basisstation zu Beginn des Handovers noch keine anhand von Rückkopplungsinformation von der Teilnehmerstation angepaßten Gewichtungsvektoren zur Verfügung stehen, initialisiert sie in Schritt S17 die Gewichtungsvektoren mit den vorgegebenen Werten. Anschließend werden die Schritte S18 bis S20 zyklisch wiederholt, wobei in dieser Zeit die Teilnehmerstation entweder keine zweite Rückkopplungsinformation sendet, oder, falls sie diese sendet, sie von der übernehmenden Basisstation nicht berücksichtigt wird. Erst nach Abschluß des Handovers (S21) führt die Basisstation in Schritt S12 eine Unterscheidung nach dem Typ von in Schritt S11 empfangener Rückkopplungsinformation durch und verwendet diese entweder zum Auswählen eines Gewichtungsvektors (S13) oder zum Aktualisieren der Gewichtungsvektoren (S14).

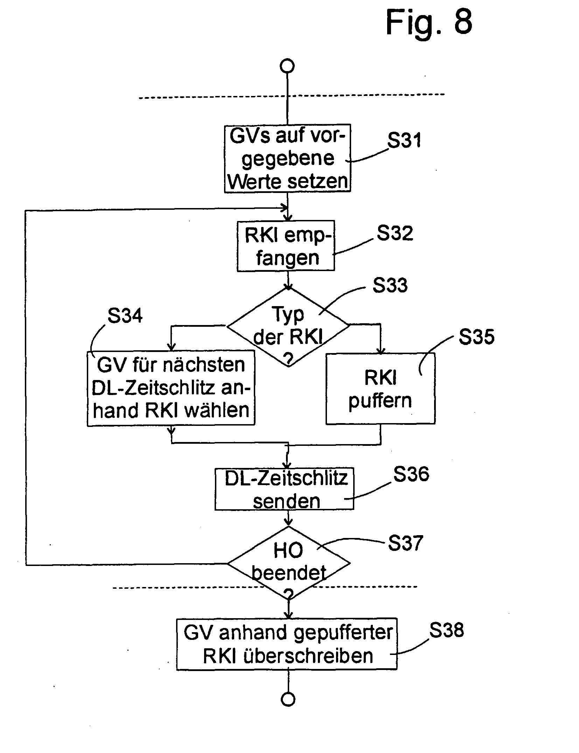

Eine weiterentwickelte Ausgestaltung des mit Bezug auf Figur 7 beschriebenen Verfahrens ist in Figur 8 dargestellt. Die Schritte S31, S32 sind mit den Schritten S17, S18 von Figur 7 identisch. Für die empfangene Rückkopplungsinformation führt die übernehmende fortentwickelte Basisstation in Schritt S33 eine Fallunterscheidung durch. Wenn die empfangene Rückkopplungsinformation vom ersten Typ ist, so wird sie in Schritt S34 in gleicher Weise wie in Schritt S13 für die Auswahl des nächsten zu verwendenden Gewichtungsvektors herangezogen; falls es sich um zweite Rückkopplungsinformation handelt, wird sie in Schritt S35 zur späteren Verwendung gepuffert.

Die nachfolgenden Schritte S36, S37 entsprechen wiederum den Schritten S20, S21 von Fig. 7.

Die Pufferung der sich in einem über mehrere Rahmen erstreckenden Handover-Vorgang ansammelnden zweiten Rückkopplungsinformation kann z.B. durch einfaches Speichern der Informationsbits in einer FIFO-Anordnung erfolgen, aus der nach Abschluß des Handovers die Rückkopplungsbits eins nach dem anderen ausgelesen werden und in der gleichen Weise, als ob sie erst nach Abschluß des Handovers empfangen worden wären, zur Berechnung von angepaßten Gewichtungsvektoren eingesetzt werden, mit denen dann in Schritt S38 die in Schritt S31 gesetzten Gewichtungsvektoren überschrieben werden. Eine andere Möglichkeit ist, daß die fortentwickelte Basisstation in Schritt S32 empfangene zweite Rückkopplungsinformation noch während des Handovers in angepaßte Gewichtungsvektoren umrechnet, diese allerdings noch nicht für die Strahlformung einsetzt, sondern lediglich diese zwischenspeichert. Auf diese Weise können bereits unmittelbar nach Abschluß des Handovers angepaßte Gewichtungsvektoren zur Verfügung stehen.

Die Operationen der fortentwickelten Basisstation nach Abschluß des Handovers sind identisch mit den Schritten S11 bis S16 und sind in der Figur nicht erneut dargestellt.

Eine einfache Basisstation, die im Falle der Figur 6 als übernehmende und im Falle der Figuren 7 und 8 als abgebende Basisstation am Handover beteiligt sein kann, kann die während des Handovers übertragene Rückkopplungsinformation in herkömmlicher Weise, wie aus der UMTS-Norm bekannt, auswerten. Wenn während des Handovers keine zweite Rückkopplungsinformation übertragen wird, entspricht dies exakt der herkömmlichen Arbeitsweise der einfachen Basisstation. Wenn im Zeitschlitz 14 eines Uplink-Rahmens zweite Rückkopplungsinformation übertragen wird, kann diese, wie oben erwähnt, von der einfachen Basisstation als erste Rückkopplungsinformation aufgefaßt und entsprechend ausgewertet werden; oder es kann vorgesehen werden, daß die einfache Basisstation diese Rückkopplungsinformation ignoriert. Auf diese Weise ist für die Dauer des Handovers Kompatibilität zwischen einfachen und fortentwickelten Basisstationen sichergestellt.

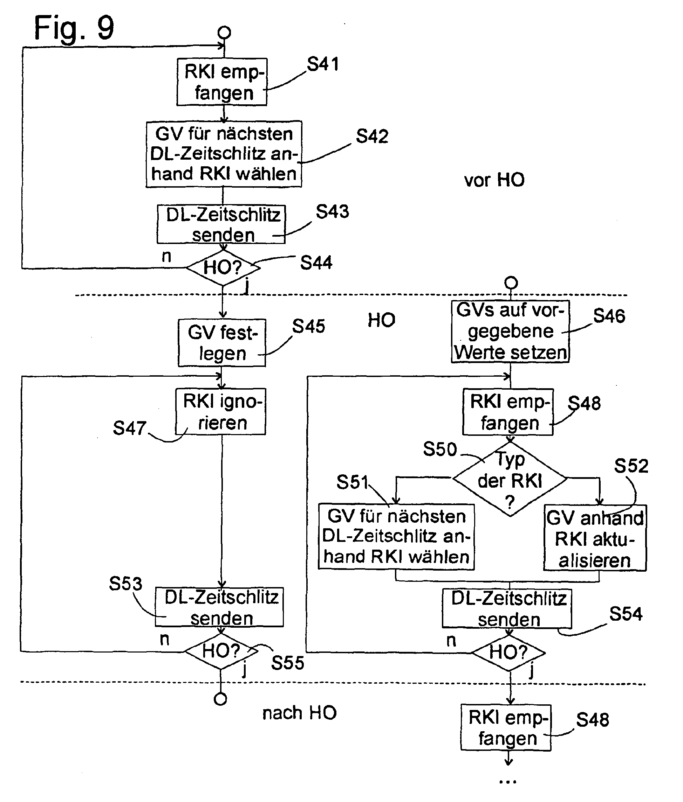

Bei den Verfahren nach Figuren 6 bis 8 bleibt während eines Handovers die Fähigkeit der fortentwickelten Basisstationen, die verwendeten Gewichtungsvektoren spezifisch an eine Teilnehmerstation anzupassen, ungenutzt. Ein solches Verfahren, das den Betrieb der fortentwickelten Basisstationen zeitweiligen Einschränkungen unterwirft, ist dann zweckmäßig, wenn die fortentwickelten Basisstationen in einem Mobilfunk-Kommunikationssystem gegenüber den einfachen Basisstationen in der Minderheit sind, so daß bei einem Handover mit Beteiligung von mehr als zwei Stationen in den meisten Fällen mehr einfache als fortentwickelte Basisstationen beteiligt sein werden. Wenn das Zahlenverhältnis zwischen einfachen und fortentwickelten Basisstationen umgekehrt ist, so ist es vorteilhafter, Kompatibilitätsprobleme zwischen den Basisstationen beim Handover dadurch zu lösen, daß der Betrieb der einfachen Basisstationen zeitweiligen Einschränkungen unterworfen wird. Ein solches Verfahren ist in Figur 9 dargestellt.

Figur 9 betrachtet den Fall eines Handovers von einer einfachen an eine fortentwickelte Basisstation. Im Normalbetrieb der einfachen Basisstation, vor Beginn des Handovers, wiederholt diese zyklisch die Schritte S41 des Empfangens einer Rückkopplungsinformation, S42 des Wählens eines Gewichtungsvektors für den nächsten Downlink-Zeitschlitz anhand der Rückkopplungsinformation und S43 des Sendens des Downlink-Zeitschlitzes.

Wenn in Schritt S44 festgestellt wird, daß ein Handover eingeleitet wird, beendet die einfache Basisstation den Diversitätsbetrieb und legt in Schritt S45 einen Gewichtungsvektor fest, den sie während der Dauer des Handovers verwenden wird. Dabei kann es sich um den vor Einleitung des Handovers zuletzt verwendeten Gewichtungsvektor oder den in einer gegebenen Zeitspanne vor Beginn des Handovers am häufigsten verwendeten Gewichtungsvektor handeln; denkbar ist auch, daß die einfache Basisstation gar keinen Gewichtungsvektor verwendet, d.h. das Downlink-Signal ungerichtet ausstrahlt.

Zeitgleich mit dem Schritt S45 initialisiert eine am Handover beteiligte fortentwickelte Basisstation ihre Gewichtungsvektoren in Schritt S46, wie oben für Schritt S17 beschrieben. Von der Teilnehmerstation während des Handovers gelieferte Rückkopplungsinformation wird nun von der einfachen Basisstation ignoriert (S47), von der fortentwickelten Basisstation hingegen in den Schritten S48 bis S52 entsprechend den oben beschriebenen Schritten S11 bis S14 ausgewertet. So ist die fortentwickelte Basisstation bereits während des Handovers in der Lage, den verwendeten Gewichtungsvektor spezifisch an die Teilnehmerstation anzupassen.

Beide Stationen senden einen Downlink-Zeitschlitz in Schritt S53 bzw. S54. Mit Abschluß des Handovers (S55) bricht die einfache Basisstation das Senden des Downlink-Signals ab; während die fortentwickelte Basisstation, wenn sie die Teilnehmerstation übernommen hat, den Zyklus der Schritte S48 bis S54 unverändert fortsetzt.

Der Handover von einer fortentwickelten an eine einfache Basisstation läuft weitgehend analog zum oben beschriebenen Verfahren ab. Selbstverständlich kann die einfache Basisstation hier während des Handovers keinen zuvor verwendeten Gewichtungsvektor weiterverwenden, weil es keinen solchen gibt; eine ungerichtete Ausstrahlung des Downlink-Signals ist hingegen in jedem Falle möglich. Darüber hinaus gibt es auch die Möglichkeit, daß die einfache Basisstation durch eine Steuerung im offenen Regelkreis einen Gewichtungsvektor auswählt. Hierfür kann z.B. die einfache Basisstation die Herkunftsrichtung des Uplink-Signals von der Teilnehmerstation durch Erfassen von dessen Phasenverschiebung an ihren Antennen abschätzen und einen an diese Herkunftsrichtung angepaßten Gewichtungsvektor wählen. Möglich ist ferner, daß die einfache Basisstation über einen Backbone des Mobilfunk-Kommunikationssystems eine Mitteilung über die Identität der abgebenden Basisstation oder gar über die ungefähre Position der Teilnehmerstation in der Funkzelle der abgebenden Basisstation empfängt und einen Gewichtungsvektor anhand dieser Ortsinformation auswählt.

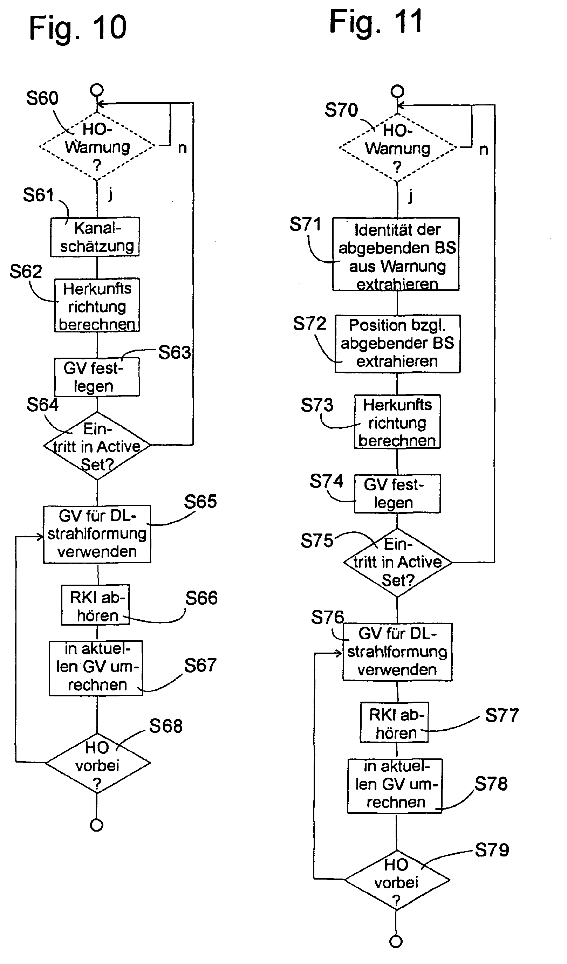

Figur 10 zeigt ein Flußdiagramm der von einer Basisstation in Verbindung mit einem Handover durchgeführten Operationen gemäß einer fünften Ausgestaltung der Erfindung. Bei diesem Bespiel wird angenommen, daß das Mobilfunk-Kommunikationssystem über eine zentrale Instanz verfügt, die mit den an einem Handover beteiligten Basisstationen über den Backbone verbunden ist und die über die Notwendigkeit eines Handovers entscheidet und schließlich unter mehreren an einem Handover beteiligten Basisstationen diejenige festlegt, die die betreffende Teilnehmerstation übernimmt.

In einer Vorbereitungsphase des Handovers versendet diese Instanz Handover-Warnungen (S60) an eine Mehrzahl von Basisstationen, die als übernehmende Basisstationen für die vom Handover betroffene Teilnehmerstation in Frage kommen. Eine solche Warnung kann bei einem auf UMTS basierenden System z.B. ein "Active Set Update"-Befehl sein, mit dem eine zu einem zukünftigen Zeitpunkt stattfindende Änderung des Active Set, also der Menge der gleichzeitig mit der Teilnehmerstation MS kommunizierenden Basisstationen angekündigt wird. Die Warnung kann z.B. Informationen über Code und/oder Frequenz des Uplink-Signals der Teilnehmerstation umfassen, die es der die Warnung empfangenden Basisstation erleichtern, in dem von ihren Antennen empfangenen Signalgemisch das Uplink-Signal dieser Teilnehmerstation zu identifizieren. An diesem Teilnehmersignal führt die potentiell übernehmende Basisstation in Schritt S61 eine Kanalschätzung durch, aus deren Ergebnissen sie in Schritt S62 die Herkunftsrichtung des Uplink-Signals berechnet. Die Kenntnis der Herkunftsrichtung dient ihr dazu, in Schritt S63 einen Gewichtungsvektor festzulegen, den sie, sobald dies erforderlich wird - d.h. im Falle eines "Active Set Update"-Befehls zum darin spezifizierten Zeitpunkt der Aufnahme der Basisstation in den Active Set - für die Strahlformung eines für die Teilnehmerstation bestimmten Downlink-Signals verwenden wird. Dabei erfolgt die Festlegung des Gewichtungsvektors bei einer einfachen Basisstation im oben definierten Sinne, indem unter den auswählbaren Gewichtungsvektoren derjenige festgelegt wird, dessen Ausbreitungscharakteristik die höchste Sendeintensität in die berechnete Herkunftsrichtung liefert; bei einer fortentwickelten Basisstation kann die in Schritt S62 berechnete Herkunftsrichtung direkt in einen Gewichtungsvektor mit in diese Richtung zentrierter Richtcharakteristik umgerechnet werden.

Anhand der so gewonnenen Abschätzung der Richtung, in der sich die Teilnehmerstation befinden muss, und einer Entfernungsabschätzung kann die potentiell übernehmende Basisstation die geographische Position der Teilnehmerstation abschätzen.

Sobald der Zeitpunkt der Aufnahme der Basisstation in den Active Set gekommen ist (S64) bzw. sie das an die Teilnehmerstation MS zu sendende Downlink-Signal vom Backbone empfängt, beginnt sie in Schritt S65, dieses zunächst unter Verwendung des in Schritt S63 festgelegten Gewichtungsvektors auszustrahlen.

Die Teilnehmerstation berücksichtigt in der von ihr gesendeten Rückkopplungsinformation nicht, dass ein Handover eingeleitet worden ist. Sie sendet wie vor Beginn des Handovers für die abgebende Basisstation optimierte Rückkopplungsinformation. Jede potentiell übernehmende Basisstation hört diese Rückkopplungsinformation mit (S66) und rechnet diese anhand der ihr zur Verfügung stehenden geographischen Informationen, zu denen neben der Positionsabschätzung der Teilnehmerstation auch die Kenntnis von der geographischen Position der abgebenden Basisstation gehört, in einen für sie geeigneten Gewichtungsvektor um (S67), den sie auf diese Weise während des Handovers fortlaufend aktualisiert und zur Strahlformung verwendet (S65).

Falls das Uplink-Signal an einer der potentiell übernehmenden Basisstationen zu schwach ist, um ausgewertet werden zu können, kann vorgesehen werden, dass eine der beteiligten Basisstationen, die das Uplink-Signal in ausreichender Stärke empfängt, die Rückkopplungsinformation über den Backbone an erstere Basisstation weitergibt.

Eine weitere Abwandlung des Verfahrens von Figur 10 ist in Figur 11 dargestellt. Der Einfachheit halber wird zunächst angenommen, dass am Handover zwei Basisstationen beteiligt sind, als abgebende und übernehmende Basisstation bezeichnet. Wie im Falle von Figur 10 wird das Verfahren angestoßen, indem die übernehmende Basisstation in Schritt S70 eine Handover-Warnung empfängt. Die Warnung enthält bei dieser Ausgestaltung nicht nur Angaben über die Identität der zu übernehmenden Teilnehmerstation, sondern auch über die der abgebenden Basisstation und über die Position der Teilnehmerstation in Bezug auf die abgebende Basisstation oder über ihre absolute geographische Position. Diese Information kann im Rahmen des UMTS-Systems z.B. vom Location Service LCS bereitgestellt werden. Denkbar ist auch, zu diesem Zweck eine Teilnehmerstation mit GPS-(Global Positioning System)-Einheiten auszurüsten, die exakte Ortsdaten an die Basisstation liefern können, in der sich die Teilnehmerstation befindet, und die im Falle eines Handovers durch Backbone-Signalisierung an alle beteiligten Basisstationen weitergegeben werden können.

Die übernehmende Basisstation extrahiert diese Ortsinformationen in Schritt S71 und S72 aus der Backbone-Signalisierung und berechnet in Schritt S73 anhand dieser Informationen in Kenntnis ihrer eigenen Position in Bezug zur abgebenden Basisstation die Richtung, in die sie das Downlink-Signal senden muss.

Wie im Falle der Fig. 10 sendet die Teilnehmerstation für die abgebende Basisstation optimierte Rückkopplungsinformation. Die übernehmende Basisstation hört diese Rückkopplungsinformation mit (S77) und rechnet diese anhand der ihr zur Verfügung stehenden geographischen Informationen in einen für sie geeigneten Gewichtungsvektor um (S78), den sie auf diese Weise während des Handovers fortlaufend aktualisiert und zur Strahlformung verwendet (S76).

Wenn mehr als zwei Basisstationen an einem Handover beteiligt sind, so steht in der Anfangsphase noch nicht fest, welche dieser Stationen die Teilnehmerstation letztlich übernehmen wird, und es ist zumindest in dieser Anfangsphase zweckmäßig, alle diese potentiell übernehmenden Stationen gleich zu behandeln. Jede einzelne potentiell übernehmende Basisstation kann dabei wie oben beschrieben ihre eigenen Gewichtungsvektoren bestimmen und aktualisieren. Wenn in einer späteren Phase des Handovers beurteilt werden kann, welche von diesen die besten Aussichten hat, die Teilnehmerstation zu übernehmen, so kann für diese und die abgebende Station ein Strahlformungsverfahren wie in Fig. 5 beschrieben eingesetzt werden, bei dem die Strahlformung dieser beider Basisstationen in einem geschlossenen Regelkreis über speziell auf sie bezogen von der Teilnehmerstation berechnete Rückkopplungsinformation erfolgt, während die anderen Basisstationen ihre Gewichtungsvektoren weiterhin indirekt anhand der geographischen Daten und der nicht für sie bestimmten Rückkoppplungsinformation ermitteln.

## Patentansprüche

1. Verfahren zum Steuern der Strahlformung eines Downlink-Signals, das in einem Mobilfunk-Kommunikationssystem von Basisstationen (EBS, FBS) an eine Teilnehmerstation (MS) ausgestrahlt wird, wobei die Basisstationen (EBS, FBS) mehrere Antennen aufweisen und eingerichtet sind, anhand von von der Teilnehmerstation (MS) gesendeter erster Rückkopplungsinformation einen Gewichtungsvektor auszuwählen und ein Downlink-Signal an die Teilnehmerstation (MS) mit dem ausgewählten Gewichtungsvektor gewichtet auszustrahlen, wobei wenigstens eine der Basisstationen (FBS), als fortentwickelte Basisstation bezeichnet, eingerichtet ist, die Koeffizienten eines anhand der ersten Rückkopplungsinformation auswählbaren Gewichtungsvektors anhand von von der Teilnehmerstation (MS) gesendeter zweiter Rückkopplungsinformation zu variieren, während bei wenigstens einer anderen Basisstation (EBS), als einfache Basisstation bezeichnet, die auswählbaren Gewichtungsvektoren vorgegeben sind, mit den Schritten:

an der Teilnehmerstation (MS):

- Festlegen (S5) und Senden (S7) einer ersten Rückkopplungsinformation;
- Festlegen (S6) von zweiter Rückkopplungsinformation anhand des von der fortentwickelten Basisstation empfangenen Downlink-Signals;

an der einfachen Basisstation (EBS):

- Senden des Downlink-Signals (S11), geformt mit dem in der ersten Rückkopplungsinformation spezifizierten Gewichtungsvektor;

an der fortentwickelten Basisstation (FBS):

- Senden des Downlink-Signals (S12), geformt mit einem anhand der zweiten Rückkopplungsinformation aktualisierten Gewichtungsvektor.

2. Verfahren nach Anspruch 1, **dadurch gekennzeichnet, dass** das von der Teilnehmerstation (MS) an die Basisstationen (EBS, FBS) gesendete Uplink-Signal in Rahmen mit mehreren Zeitschlitzen gegliedert ist, und dass die Teilnehmerstaentweder die erste oder die zweite Rückkopplungsinformation sendet.

3. Verfahren nach Anspruch 2, **dadurch gekennzeichnet, dass** die einfache Basisstation (EBS) von der Teilnehmerstation (MS) gesendete zweite Rückkopplungsinformation als erste Rückkopplungsinformation interpretiert.

4. Verfahren nach Anspruch 2, **dadurch gekennzeichnet, dass** die einfache Basisstation (EBS) von der Teilnehmerstation (MS) gesendete zweite Rückkopplungsinformation ignoriert (S9) und in einem Zeitschlitz, in dem die Teilnehmerstation (MS) zweite Rückkopplungsinformation sendet, den Gewichtungsvektor unverändert lässt.

5. Verfahren nach einem der Ansprüche 2 bis 4, **dadurch gekennzeichnet, dass** jeder Rahmen fünfzehn Zeitschlitze umfasst, und dass die Teilnehmerstation (MS) in vierzehn dieser Zeitschlitze erste Rückkopplungsinformation und in einem zweite Rückkopplungsinformation überträgt.

6. Verfahren nach einem der vorhergehenden Ansprüche, **dadurch gekennzeichnet, dass** die Teilnehmerstation (MS) die erste Rückkopplungsinformation anhand des von der wenigstens einen einfachen Basisstation (EBS) empfangenen Downlink-Signals festlegt.

7. Verfahren nach Anspruch 6, **dadurch gekennzeichnet, dass** die fortentwickelte Basisstation (FBS) die erste Rückkopplungsinformation ignoriert.

8. Verfahren nach einem der vorhergehenden Ansprüche, **dadurch gekennzeichnet, dass** die fortentwickelte Basisstation (FBS) den zur Formung des Downlink-Signals verwendeten Gewichtungsvektor anhand einer in einem offenen Regelkreis gewonnenen Information über die relative Lage der Teilnehmerstation (MS) in Bezug zu der fortentwickelten Basisstation auswählt.

9. Verfahren nach Anspruch 8, **dadurch gekennzeichnet, dass** die fortentwickelte Basisstation (FBS) die Ortsinformation gewinnt durch Abschätzen der Herkunftsrichtung des von der Teilnehmerstation (MS) gesendeten Uplink-Signals.

10. Verfahren nach Anspruch 8, **dadurch gekennzeichnet, dass** die fortentwickelte Basisstation (FBS) die Ortsinformation gewinnt durch Empfang von Signalisierungsinformation von einer anderen Station des Mobilfunk-Kommunikationssystems.

11. Verfahren nach einem der Ansprüche 1 bis 5, **dadurch gekennzeichnet, dass** die fortentwickelte Basisstation (FBS) anhand der ersten Rückkopplungsinformation den für die Strahlformung verwendeten Gewichtungsvektor auswählt (S8), und dass die Teilnehmerstation (MS) die erste Rückkopplungsinformation so festlegt (S5'), dass die Summe der Downlink-Signalleistung von einfachen und fortentwickelten Basisstationen (EBS, FBS) maximiert wird.

12. Verfahren nach Anspruch 11, **dadurch gekennzeichnet, dass** die Teilnehmerstation denjenigen Wert m der ersten Rückkopplungsinformation festlegt, der den Ausdruck

$$P_m = w_m^H \left( \sum_i H_i^{\ H} H_i \right) w_m + \sum_i v_{i,m}^H G_i^{\ H} G_i v_{i,m}$$

maximiert, wobei $w_m$ einen an einer einfachen Basisstation wählbaren Gewichtungsvektor, $v_m$ einen an einer fort-entwickelten Basisstation wählbaren Gewichtungsvektor, $H_i$ die Impulsantwort der Antennen einer einfachen Ba-sisstation i und $G_i$ die Impulsantwort der Antennen einer fortentwickelten Basisstation i bezeichnet.

13. Verfahren zum Durchführen eines Handovers einer Teilnehmerstation (MS) von einer abgebenden an eine übernehmende Basisstation eines Mobilfunk-Kommunikationssystems (EBS, FBS), bei dem in einer Übergangsphase des Handovers die Teilnehmerstation (MS) mit einer Mehrzahl von Basisstationen, darunter die abgebende und die übernehmende Basisstation (EBS, FBS), kommuniziert, **dadurch gekennzeichnet, dass** die Strahlformung der Basisstationen (EBS, FBS) in der Übergangsphase gemäß dem Verfahren nach einem der vorhergehenden Ansprüche durchgeführt wird.

14. Verfahren nach Anspruch 1 und 13, **dadurch gekennzeichnet, dass** während des Handovers die fortentwickelte Basisstation als auswählbare Gewichtungsvektoren die vorgegebenen Gewichtungsvektoren der einfachen Basisstation setzt (S17) und anhand der ersten Rückkopplungsinformation (S18) unter diesen einen für die Strahlformung verwendeten Gewichtungsvektor auswählt (S19).

15. Verfahren nach Anspruch 14, **dadurch gekennzeichnet, dass** die fortentwickelte Basisstation während des Handovers eine Anzahl ihrer Antennen zur Übertragung des Downlink-Signals zur Teilnehmerstation abschaltet.

16. Verfahren nach Anspruch 14 oder 15, **dadurch gekennzeichnet, dass** die fortentwickelte Basisstation die abgebende Station ist und dass sie zu Beginn des Handovers die bis dahin verwendeten Gewichtungsvektoren durch die vorgegebenen Gewichtungsvektoren der einfachen Basisstation ersetzt (S17).

17. Verfahren nach Anspruch 14 oder 15, **dadurch gekennzeichnet, dass** die fortentwickelte Basisstation die übernehmende Station ist und dass sie während des Handovers von der Teilnehmerstation gesendete zweite Rückkopplungsinformation aufzeichnet (S35) und nach Ende des Handovers die Gewichtungsvektoren anhand der aufgezeichneten Rückkopplungsinformation variiert (S38).

18. Verfahren nach einem der Ansprüche 14 bis 17, **dadurch gekennzeichnet, dass** die einfache und die fortentwickelte Basisstation eine erste Gruppe von beiden Stationen zugehörigen Pilotsignalen für eine Kanalschätzung durch die Teilnehmerstation aussenden und dass die fortentwickelte Basisstation darüber hinaus weitere Pilotsignale sendet, und dass während des Handovers die Teilnehmerstation nur die Pilotsignale der ersten Gruppe berücksichtigt.

19. Verfahren nach Anspruch 1 und 13 **dadurch gekennzeichnet, dass** die einfache Basisstation (EBS) während des Handovers den Downlink-Strahl unabhängig von der Rückkopplungsinformation formt (S45, S47, S53) und die fortentwickelte Basisstation (FBS) den Gewichtungsvektor anhand der Rückkopplungsinformation variiert (S52) und auswählt (S51).

20. Verfahren nach Anspruch 19, **dadurch gekennzeichnet, dass** die einfache Basisstation während des Handovers einen ungerichteten Strahl formt.

21. Verfahren nach Anspruch 19, **dadurch gekennzeichnet, dass** die einfache Basisstation einen zu Beginn des Handovers ausgewählten Gewichtungsvektor bis zum Ende des Handovers unverändert verwendet.

22. Verfahren nach Anspruch 19, **dadurch gekennzeichnet, dass** die einfache Basisstation den verwendeten Gewichtungsvektor im Laufe des Handovers anhand einer in einem offenen Regelkreis gewonnenen Information über die relative Lage der Teilnehmerstation in Bezug zu der einfachen Basisstation auswählt.

23. Verfahren nach Anspruch 1 und 13, ggf. unter Beteiligung weiterer Basisstationen, bei dem in einer Übergangsphase des Handovers alle Basisstationen (EBS; FBS) jeweils ein Downlink-Signal an die Teilnehmerstation (MS) senden, **dadurch gekennzeichnet, dass** die Basisstationen auf eine erste Gruppe und eine zweite Gruppe aufgeteilt werden, dass die Teilnehmerstation für die Basisstation(en) der ersten Gruppe optimierte Rückkopplungsinformation überträgt und dass die Basisstation(en) der zweiten Gruppe einen Gewichtungsvektor anhand der Rückkopplungsinformation unter Berücksichtigung von geographischer Information über die Position der Teilnehmerstation auswählt/auswählen.

24. Verfahren nach Anspruch 23, **dadurch gekennzeichnet, dass** die Rückkopplungsinformation von einer Basisstation der ersten Gruppe, die die Rückkopplungsinformation empfangen hat, über den Backbone an die Basisstation(en) der zweiten Gruppe signalisiert wird.

25. Verfahren nach Anspruch 23 oder 24, **dadurch gekennzeichnet, dass** die abgebende Basisstation der ersten Gruppe zugeteilt wird.

26. Verfahren nach einem der Ansprüche 23 bis 25, **dadurch gekennzeichnet, dass** die geographische Information von jeder Basisstation der zweiten Gruppe aus einer Messung eines von der Teilnehmerstation gesendeten Uplink-Signals gewonnen wird (S61, S62).

**27.** Verfahren nach einem der Ansprüche 23 bis 26, **dadurch gekennzeichnet, dass** die geographische Information eine Angabe über die Identität der abgebenden Basisstation umfasst.

**28.** Verfahren nach Anspruch 27, **dadurch gekennzeichnet, dass** die Information ferner Angaben über die Position der Teilnehmerstation in der Zelle der abgebenden Basisstation umfasst.

**29.** Verfahren nach Anspruch 27 oder 28, **dadurch gekennzeichnet, dass** die Information von der abgebenden Basisstation in dem Mobilfunk-Kommunikationssystem verbreitet wird.

**30.** Verfahren nach einem der Ansprüche 23 bis 29, **dadurch gekennzeichnet, dass** die geographische Information eine LCS- oder GPS-Information ist.

**31.** Basisstation (FBS) für ein Mobilfunk-Kommunikationssystem, welche mehrere Antennen aufweist und eingerichtet ist, anhand von von einer Teilnehmerstation (MS) gesendeter erster Rückkopplungsinformation einen Gewichtungsvektor auszuwählen und ein Downlink-Signal an die Teilnehmerstation (MS) mit dem ausgewählten Gewichtungsvektor gewichtet auszustrahlen, und die eingerichtet ist, die Koeffizienten eines anhand der ersten Rückkopplungsinformation auswählbaren Gewichtungsvektors anhand von von der Teilnehmerstation (MS) gesendeter zweiter Rückkopplungsinformation zu variieren, **dadurch gekennzeichnet, dass** die Basisstation (FBS) ferner eingerichtet ist, zu Beginn eines Handovers der Teilnehmerstation (MS) die auswählbaren Gewichtungsvektoren durch vorgegebene Gewichtungsvektoren zu ersetzen (S17).

**32.** Basisstation nach Anspruch 31, **dadurch gekennzeichnet, dass** sie die vorgegebenen Gewichtungsvektoren während des Handovers nicht ändert.

**33.** Basisstation nach Anspruch 31, **dadurch gekennzeichnet, dass** sie einen Puffer zum Zwischenspeichern von zweiter Rückkopplungsinformation oder von davon abgeleiteter Information während eines Handovers aufweist.

**34.** Basisstation nach Anspruch 31 welche eingerichtet ist, einen Gewichtungsvektor unter vorgegebenen Gewichtungsvektoren auszuwählen **dadurch gekennzeichnet, dass** die Basisstation eingerichtet ist, während des Handovers den Downlink-Strahl unabhängig von der Rückkopplungsinformation zu formen.

**Claims**

**1.** Method for controlling beam forming of a downlink signal radiated in a mobile-radio communication system from base stations (SBS, FBS) to a user station (MS), with said base stations (SBS, FBS) having a plurality of antennas and having been set up to select a weight vector using first feedback information sent from the user station (MS) and radiate a downlink signal weighted with the selected weight vector to said user station (MS), with at least one of said base stations (FBS), referred to as a further-developed base station, having been set up to vary the coefficients of a weight vector selectable using the first feedback information using second feedback information sent by the user station (MS), while in the case of at least one other base station (SBS), referred to as a simple base station, the selectable weight vectors have been pre-specified, having the steps: At the user station (MS) :

- Establishing (S5) and sending (S7) a first feedback information;
- Establishing (S6) second feedback information using the downlink signal received from the further-developed base station;
At the simple base station (SBS):
- Sending the downlink signal (S11) formed with the weight vector established in the first feedback information;
At the further-developed base station (FBS):
- Sending the downlink signal (S12) formed with a weight vector updated using the second feedback information.

**2.** Method according to claim 1 **characterized in that** the uplink signal sent by the user station (MS) to the base stations (SBS, FBS) is structured into frames having a plurality of timeslots, and the user station sends either the first or the second feedback information.

3. Method according to claim 2 **characterized in that** the simple base station (SBS) interprets second feedback information sent by the user station (MS) as first feedback information.

4. Method according to claim 2 **characterized in that** the simple base station (SBS) ignores (S9) second feedback information sent by the user station (MS) and in a timeslot in which the user station (MS) sends second feedback information leaves the weight vector unchanged.

5. Method according to one of claims 2 to 4 **characterized in that** each frame contains fifteen timeslots and **in that** the user station (MS) transmits first feedback information in fourteen of said timeslots and second feedback information in one.

6. Method according to one of the preceding claims **characterized in that** the user station (MS) establishes first feedback information using the downlink signal received from the at least one simple base station (SBS).

7. Method according to claim 6 **characterized in that** the further-developed base station (FBS) ignores the first feedback information.

8. Method according to one of the preceding claims
   **characterized in that** the further-developed base station (FBS) selects the weight vector used for forming the downlink signal using information, obtained in an open control loop, about the relative position of the user station (MS) with reference to the further-developed base station.

9. Method according to claim 8 **characterized in that** the further-developed base station (FBS) obtains the location information by estimating the originating direction of the uplink signal sent by the user station (MS).

10. Method according to claim 8 **characterized in that** the further-developed base station (FBS) obtains the location information by receiving signalling information from another station of the mobile-radio communication system.

11. Method according to one of claims 1 to 5 **characterized in that** the further-developed base station (FBS) selects the weight vector used for beam forming using the first feedback information (S8) and **in that** the user station (MS) establishes the first feedback information in such a way (S5') that the sum of the downlink signal power of the simple and further-developed base stations (SBS, FBS) is maximized.

12. Method according to claim 11 **characterized in that** the user station establishes the specific value m of the first feedback information, which value maximizes the expression

$$P_m = w_m^H (\sum_i H_i^H H_i) w_m + \sum_i v_{i,m}^H G_i^H G_i v_{i,m} \,,$$

where $w_m$ is a weight vector selectable at a simple base station, $v_m$ is a weight vector selectable at a further-developed base station, $H_i$ is the pulse response of the antennas belonging to a simple base station i, and $G_i$ is the pulse response of the antennas belonging to a further-developed base station i.

13. Method for implementing a handover of a user station (MS) from a relinquishing to an accepting base station of a mobile-radio communication system (SBS, FBS) wherein the user station (MS) communicates with a multiplicity of base stations, among them the relinquishing and accepting base station (SBS, FBS), in a transitional phase of handover, **characterized in that** beam forming of the base stations (SBS, FBS) is performed during said transitional phase as per the method according to one of the preceding claims.

14. Method according to claim 1 and 13 **characterized in that** during handover the further-developed base station sets as selectable weight vectors the pre-specified weight vectors of the simple base station (S17) and, using the first feedback information (S18), selects from among these a weight vector used for beam forming (S19).

15. Method according to claim 14 **characterized in that** during handover the further-developed base station deactivates a number of its antennas for transmitting the downlink signal to the user station.

**16.** Method according to claim 14 or 15 **characterized in that** the further-developed base station is the relinquishing station and **in that** it replaces the weight vectors used hitherto with the pre-specified weight vectors of the simple base station when handover begins (S17).

**17.** Method according to claim 14 or 15 **characterized in that** the further-developed base station is the accepting station and **in that**, during handover, it records second feedback information sent by the user station (S35) and, after handover, varies the weight vectors using the recorded feedback information (S38).

**18.** Method according to one of claims 14 to 17 **characterized in that** the simple and the further-developed base station send a first group of pilot signals belonging to both stations for a channel estimation by the user station and **in that** the further-developed base station furthermore sends further pilot signals, and **in that** the user station takes account during handover only of the pilot signals belonging to the first group.

**19.** Method according to claim 1 and 13 **characterized in that** during handover the simple base station (SBS) forms the downlink beam independently of the feedback information (S45, S47, S53) and the further-developed base station (FBS) varies (S52) and selects (S51) the weight vector using the feedback information.

**20.** Method according to claim 19 **characterized in that** the simple base station forms a non-directional beam during handover.

**21.** Method according to claim 19 **characterized in that** the simple base station continues using a weight vector selected at the start of handover in unchanged form until the end of handover.

**22.** Method according to claim 19 **characterized in that** in the course of a handover the simple base station selects the weight vector used using information, obtained in an open control loop, about the user station's relative position with reference to the simple base station.

**23.** Method according to claim 1 and 13, where applicable with the involvement of further base stations, wherein during a transitional phase of handover all base stations (SBS; FBS) in each case send a downlink signal to the user station (MS), **characterized in that** the base stations are divided into a first group and a second group, **in that** the user station transmits feedback information optimized for the base station(s) belonging to the first group, and **in that**, using said feedback information, the base station(s) belonging to the second group select/s a weight vector taking account of geographical information about the user station's position.

**24.** Method according to claim 23 **characterized in that** the feedback information is signalled via the backbone to the base station(s) belonging to the second group by a base station belonging to the first group that has received the feedback information.

**25.** Method according to claim 23 or 24 **characterized in that** the relinquishing base station is assigned to the first group.

**26.** Method according to one of claims 23 to 25 **characterized in that** the geographical information is obtained by each base station belonging to the second group from a measurement performed on an uplink signal sent by the user station (S61, S62).

**27.** Method according to one of claims 23 to 26 **characterized in that** the geographical information includes details of the relinquishing base station's identity.

**28.** Method according to claim 27 **characterized in that** the information further includes details of the user station's position in the relinquishing base station's cell.

**29.** Method according to claim 27 or 28 **characterized in that** the information is disseminated in the mobile-radio communication system by the relinquishing base station.

**30.** Method according to one of claims 23 to 29 **characterized in that** the geographical information is LCS or GPS information.

**31.** Base station (FBS) for a mobile-radio communication system, which station has a plurality of antennas and has been set up to select a weight vector using first feedback information sent by a user station (MS) and to radiate a downlink signal weighted with said selected weight vector to said user station (MS), and which has been set up to vary the coefficients of a weight vector selectable using the first feedback information using second feedback information sent by the user station (MS), **characterized in that** the base station (FBS) has further been set up to replace the selectable weight vectors with pre-specified weight vectors (S17) when the user station (MS) starts being handed over.

**32.** Base station according to claim 31 **characterized in that** it does not change the pre-specified weight vectors during handover.

**33.** Base station according to claim 31 **characterized in that** it has a buffer for buffering second feedback information, or information derived therefrom, during a handover.

**34.** Base station according to claim 31 that has been set up to select a weight vector from among pre-specified weight vectors, **characterized in that** the base station has been set up to form the downlink beam during handover independently of the feedback information.


**Revendications**

**1.** Procédé pour contrôler la mise en forme du faisceau d'un signal de liaison descendante, qui est émis dans un système de communication de téléphonie mobile de stations de base (EBS, FBS) à une station d'abonné (MS), les stations de base (EBS, FBS) présentant plusieurs antennes et étant aménagées pour sélectionner un vecteur de pondération à l'aide d'une première information de réaction émise par la station d'abonné (MS) et pour diffuser de façon pondérée un signal de liaison descendante à l'attention de la station d'abonné (MS) avec le vecteur de pondération choisi, au moins l'une des stations de base (FBS), désignée par station de base perfectionnée, étant aménagée pour faire varier les coefficients d'un vecteur de pondération pouvant être choisi à l'aide de la première information de réaction à l'aide de la seconde information de réaction émise par la station d'abonné (MS) alors que, sur au moins une autre station de base (EBS), désignée par station de base simple, les vecteurs de pondération pouvant être choisis sont prédéfinis, comprenant les étapes suivantes :

à la station d'abonné (MS) :

- définition (S5) et émission (S7) d'une première information de réaction ;
- définition (S6) d'une seconde information de réaction à l'aide du signal de ligne descendante reçu par la station de base perfectionnée ;

à la station de base simple (EBS) :

- envoi du signal de liaison descendante (S11), formé avec le vecteur de pondération spécifié dans la première information de réaction ;

à la station de base perfectionnée (FBS) :

- envoi du signal de liaison descendante (S12), formé avec un vecteur de pondération actualisé à l'aide de la seconde information de réaction.

**2.** Procédé selon la revendication 1, **caractérisé en ce que** le signal de liaison ascendante envoyé de la station d'abonné (MS) à la station de base (EBS, FBS) est structuré en trames avec plusieurs créneaux temporels, et **en ce que** la station d'abonné envoie soit la première, soit la seconde information de réaction.

**3.** Procédé selon la revendication 2, **caractérisé en ce que** la station de base simple (EBS) interprète la seconde information de réaction, envoyée par la station d'abonné (MS), comme une première information de réaction.

**4.** Procédé selon la revendication 2, **caractérisé en ce que** la station de base simple (EBS) ignore (S9) la seconde information de réaction envoyée par la station d'abonné (MS) et laisse inchangé le vecteur de pondération dans un créneau temporel dans lequel la station d'abonné (MS) envoie la seconde information de réaction.

**5.** Procédé selon l'une quelconque des revendications 2 à 4, **caractérisé en ce que** chaque trame comprend quinze créneaux temporels et **en ce que** la station d'abonné (MS) transmet dans quatorze de ces créneaux temporels une première information de réaction et dans un autre créneau temporel une seconde information de réaction.

6. Procédé selon l'une quelconque des revendications précédentes, **caractérisé en ce que** la station d'abonné (MS) définit la première information de réaction à l'aide du signal de liaison descendante reçu de la au moins une simple station de base (EBS).

7. Procédé selon la revendication 6, **caractérisé en ce que** la station de base perfectionnée (FBS) ignore la première information de réaction.

8. Procédé selon l'une quelconque des revendications précédentes, **caractérisé en ce que** la station de base perfectionnée (FBS) choisit le vecteur de pondération utilisé pour la mise en forme du signal de liaison descendante à l'aide d'une information obtenue dans un circuit de réglage ouvert sur la position relative de la station d'abonné (MS) par rapport à la station de base perfectionnée.

9. Procédé selon la revendication 8, **caractérisé en ce que** la station de base perfectionnée (FBS) obtient l'information locale par l'évaluation de la direction d'origine du signal de liaison descendante envoyé par la station d'abonné (MS).

10. Procédé selon la revendication 8, **caractérisé en ce que** la station de base perfectionnée (FBS) obtient l'information locale par la réception d'information de signalisation d'une autre station du système de communication de téléphonie mobile.

11. Procédé selon l'une quelconque des revendications 1 à 5, **caractérisé en ce que** la station de base perfectionnée (FBS) choisit (S8) à l'aide de la première information de réaction le vecteur de pondération utilisé pour la mise en forme du faisceau, et **en ce que** la station d'abonné (MS) définit (S5') la première information de réaction de telle sorte que la somme de la puissance de signal de la liaison descendante de stations de base simples et perfectionnées (EBS, FBS) est maximisée.

12. Procédé selon la revendication 11, **caractérisé en ce que** la station d'abonné définit la valeur m de la première information de réaction, qui maximise l'expression suivante :

$$P_m = w_m^H (\sum_i H_i^H H_i) w_m + \sum_i v_{i.m}^H G_i^H G_i v_{i.m}$$

$W_m$ désignant un vecteur de pondération pouvant être choisi sur une station de base simple, $v_m$ un vecteur de pondération pouvant être choisi sur une station de base perfectionnée, $H_i$ la réponse impulsionnelle des antennes d'une station de base simple i et $G_i$ la réponse impulsionnelle des antennes d'une station de base perfectionnée i.

13. Procédé pour la mise en oeuvre d'un Handover d'une station d'abonné (MS) d'une station de base émettrice à une station de base réceptrice d'un système de communication de téléphonie mobile (EBS, FBS) dans lequel, lors d'une phase de transition du Handover, la station d'abonné (MS) communique avec une pluralité de stations de base, dont la station de base émettrice et la station de base réceptrice (EBS, FBS), **caractérisé en ce que** la mise en forme du faisceau des stations de base (EBS, FBS) est effectuée lors de la phase de transition selon le procédé selon l'une quelconque des revendications précédentes.

14. Procédé selon les revendications 1 et 13, **caractérisé en ce que**, pendant le Handover, la station de base perfectionnée définit comme vecteurs de pondération pouvant être choisi les vecteurs de pondération prédéfinis de la station de base simple (S17) et choisit à l'aide de la première information de réaction (S18) parmi ces vecteurs un vecteur de pondération utilisé pour la mise en forme du faisceau (S19).

15. Procédé selon la revendication 14, **caractérisé en ce que** la station de base perfectionnée déconnecte pendant le Handover un certain nombre de ses antennes pour la transmission du signal de liaison descendante à la station d'abonné.

16. Procédé selon la revendication 14 ou 15, **caractérisé en ce que** la station de base perfectionnée est la station émettrice et **en ce qu'**elle remplace (S17) au début du Handover les vecteurs de pondération utilisés jusqu'à présent par les vecteurs de pondération prédéfinis de la station de base simple.

**17.** Procédé selon la revendication 14 ou 15, **caractérisé en ce que** la station de base perfectionnée est la station de réception et **en ce qu'**elle enregistre (S35) la seconde information d'injection envoyée pendant le Handover par la station d'abonné et fait varier (S38) après la fin du Handover les vecteurs de pondération à l'aide de l'information d'injection enregistrée.

**18.** Procédé selon l'une quelconque des revendications 14 à 17, **caractérisé en ce que** la station de base simple et la station de base perfectionnée émettent un premier groupe de signaux pilotes appartenant aux deux stations pour une évaluation de canal par la station d'abonné et **en ce que** la station de base perfectionnée envoie d'autre part d'autres signaux pilotes et **en ce que**, pendant le Handover, la station d'abonné ne prend en compte que les signaux pilotes du premier groupe.

**19.** Procédé selon les revendications 1 et 13, **caractérisé en ce que** la station de base simple (EBS) forme (S45, S47, S53) pendant le Handover le faisceau de liaison descendante indépendamment de l'information d'injection et la station de base perfectionnée (FBS) modifie (S52) et choisit (S51) le vecteur de pondération à l'aide de l'information de réaction.

**20.** Procédé selon la revendication 19, **caractérisé en ce que** la station de base simple met en forme un faisceau non dirigé pendant le Handover.

**21.** Procédé selon la revendication 19, **caractérisé en ce que** la station de base simple utilise de façon inchangée un vecteur de pondération choisi au début du Handover jusqu'à la fin du Handover.

**22.** Procédé selon la revendication 19, **caractérisé en ce que** la station de base simple choisit le vecteur de pondération utilisé au cours du Handover à l'aide d'une information obtenue dans un circuit de réglage ouvert sur la position relative de la station d'abonné par rapport à la station de base simple.

**23.** Procédé selon les revendications 1 et 13, éventuellement avec l'implication d'autres stations de base, dans lequel, lors d'une phase de transition du Handover, toutes les stations de base (EBS ; FBS) envoient chacune un signal de liaison descendante à la station d'abonné (MS), **caractérisé en ce que** les stations de base sont réparties entre un premier groupe et un second groupe, **en ce que** la station d'abonné transmet une information de réaction optimisée pour la (les) station(s) de base du premier groupe et **en ce que** la (les) station(s) de base du second groupe sélectionne (nt) un vecteur de pondération à l'aide de l'information de réaction en tenant compte de l'information géographique sur la position de la station d'abonné.

**24.** Procédé selon la revendication 23, **caractérisé en ce que** l'information de réaction est signalée par une station de base du premier groupe, qui a reçu l'information de réaction, via le circuit de retour à la (aux) station(s) de base du second groupe.

**25.** Procédé selon la revendication 23 ou 24, **caractérisé en ce que** la station de base émettrice est attribuée au premier groupe.

**26.** Procédé selon l'une quelconque des revendications 23 à 25, **caractérisé en ce que** l'information géographique est obtenue (S61, S62) par chaque station de base du second groupe à partir d'une mesure d'un signal de liaison ascendante émis par la station d'abonné.

**27.** Procédé selon l'une quelconque des revendications 23 à 26, **caractérisé en ce que** l'information géographique comprend une indication concernant l'identité de la station de base émettrice.

**28.** Procédé selon la revendication 27, **caractérisé en ce que** l'information comprend également des indications concernant la position de la station d'abonné dans la cellule de la station de base émettrice.

**29.** Procédé selon la revendication 27 ou 28, **caractérisé en ce que** l'information est traitée par la station de base émettrice dans le système de communication de téléphonie mobile.

**30.** Procédé selon l'une quelconque des revendications 23 à 29, **caractérisé en ce que** l'information géométrique est une information LCS ou GPS.

**31.** Station de base (FBS) pour un système de communication de téléphonie mobile, qui présente plusieurs antennes et est aménagé pour sélectionner un vecteur de pondération à l'aide de la première information de réaction envoyée par une station d'abonné (MS) et pour envoyer un signal de liaison descendante à la station d'abonné (MS) de façon pondérée avec le vecteur de pondération sélectionné et qui est aménagé pour faire varier les coefficients d'un vecteur de pondération pouvant être choisi à l'aide de la première information de réaction à l'aide d'une seconde information de réaction envoyée par la station d'abonné (MS), **caractérisée en ce que** la station de base (FBS) est aménagée également pour remplacer (S17) au début d'un Handover de la station d'abonné (MS) les vecteurs de pondération pouvant être choisis par des vecteurs de pondération prédéfinis.

**32.** Station de base selon la revendication 31, **caractérisée en ce qu'**elle ne modifie pas les vecteurs de pondération prédéfinis pendant le Handover.

**33.** Station de base selon la revendication 31, **caractérisée en ce qu'**elle présente un tampon pour le stockage provisoire d'une seconde information de réaction ou d'une information déduite de celle-ci pendant un Handover.

**34.** Station de base selon la revendication 31, qui est aménagée pour sélectionner un vecteur de pondération parmi des vecteurs de pondération prédéfinis, **caractérisée en ce que** la station de base est aménagée pour mettre en forme pendant le Handover le faisceau de liaison descendante indépendamment de l'information de réaction.

Fig. 1

Fig. 2

## Fig. 3

## Fig. 4

| Slot # | 0 | 1 | 2 | 3 | 4 | 5 | 6 | 7 | 8 | 9 | 10 | 11 | 12 | 13 | 14 |
|---|---|---|---|---|---|---|---|---|---|---|---|---|---|---|---|
| 1. RKI | x | x | x | x | x | x | x | x | x | x | x | x | x | x | |
| 2. RKI | | | | | | | | | | | | | | | x |

## Fig. 5

## Fig. 6

## Fig. 7

# Fig. 8

GVs auf vorgegebene
Werte setzen — S31

RKI empfangen — S32

S33 — Typ
der RKI
?

S34 — GV für nächsten
DL-Zeitschlitz anhand RKI wählen

S35 — RKI
puffern

DL-Zeitschlitz
senden — S36

HO
beendet
? — S37

GV anhand gepufferter
RKI überschreiben — S38

# Fig. 9

```
                    ○
              ┌──────────┐
              │ RKI emp- │    S41
              │ fangen   │
              └──────────┘
              ┌──────────────┐
              │ GV für nächsten │   S42
              │ DL-Zeitschlitz an- │
              │ hand RKI wählen │
              └──────────────┘           vor HO
              ┌──────────────┐
              │ DL-Zeitschlitz │   S43
              │ senden       │
              └──────────────┘
         n    ◇ HO? ◇    S44
              │ j
- - - - - - - - - - - - - - - - - - - - - - - - - - - - - - - - - - - - - - -
                                          ○
              ┌──────────┐        HO   ┌──────────────┐
              │ GV fest- │  S45        │ GVs auf vor- │  S46
              │ legen    │             │ gegebene     │
              └──────────┘             │ Werte setzen │
                                       └──────────────┘
              ┌──────────┐             ┌──────────┐
              │ RKI igno-│             │ RKI emp- │  S48
       S47    │ rieren   │             │ fangen   │
              └──────────┘             └──────────┘
                                 S50   ◇ Typ
                                       der RKI ◇        S52
                              S51       │ ?
                         ┌──────────────┐   ┌──────────┐
                         │ GV für nächsten │ │ GV anhand│
                         │ DL-Zeitschlitz an-│ │ RKI aktu-│
                         │ hand RKI wählen │ │ alisieren│
                         └──────────────┘   └──────────┘
      S53   ┌──────────────┐     ┌──────────────┐
            │ DL-Zeitschlitz │    │ DL-Zeitschlitz │
            │ senden       │     │ senden       │   S54
            └──────────────┘     └──────────────┘
       n    ◇ HO? ◇  S55    n    ◇ HO? ◇
            │ j                   │ j
- - - - - - - - - - - - - - - - - - - - - - - - - - - - - - - - - - - - - - -
            ○         nach HO    ┌──────────┐
                                 │ RKI emp- │  S48
                                 │ fangen   │
                                 └──────────┘
                                     ↓
                                    ...
```

# Fig. 10

S60 — HO-Warnung?
n
j
S61 — Kanal-schätzung
S62 — Herkunfts richtung berechnen
S63 — GV fest-legen
S64 — Ein-tritt in Active Set?
S65 — GV für DL-strahlformung verwenden
S66 — RKI ab-hören
S67 — in aktuel-len GV um-rechnen
S68 — HO vorbei?

# Fig. 11

S70 — HO-Warnung?
n
j
S71 — Identität der abgebenden BS aus Warnung extrahieren
S72 — Position bzgl. abgebender BS extrahieren
S73 — Herkunfts richtung berechnen
S74 — GV fest-legen
S75 — Ein-tritt in Active Set?
S76 — GV für DL-strahlformung verwenden
S77 — RKI ab-hören
S78 — in aktuel-len GV um-rechnen
S79 — HO vorbei?